# EUROPÄISCHE PATENTANMELDUNG

(11) **EP 0 984 205 A2**
(43) Veröffentlichungstag der Anmeldung: **08.03.2000**
(21) Anmeldenummer: 99117170.3
(22) Anmeldetag: 02.09.1999
(51) Int. Cl.: F16H 3/66

(54) **Orbitalgetriebe als Weiterentwicklung von Umlaufrädergetrieben**

(30) Priorität: 04.09.1998 DE 19840417
(71) Anmelder: Schwedler, Knut, 47589 Uedem (DE)
(72) Erfinder: Schwedler, Knut, 47589 Uedem (DE)

(57) **Zusammenfassung**

**1.** Orbitalgetriebe als Weiterentwicklung von Umlaufrädergetrieben
**2.1** Stand der Technik sind Planetenschaltgetriebe, die zum Schalten einer Stufe zwei Schaltglieder (Bremse und Kupplung) benötigen. Da bei mehrstufigen Planetenschaltgetrieben An- und Abtrieb immer an der innersten von mehreren konzentrischen Wellen liegen muß, ist der Aufbau entsprechend komplex.
**2.2** Das Orbitalgetriebe vereint einen konstruktiv einfachen Grundaufbau mit einer hohen Variabilität der anwendungsspezifischen Ausführungsformen, indem Sonnenrad (1.1), Planetenradträger (2.3.1) mit Grundplanetenrad (1.2) / Richtungsplanetenrad (1.3) und Orbitalrad (1.5) auf einer gemeinsamen, feststehenden, Zentralachse (2.1) angeordnet sind. Wenn das Orbitalrad (1.5) mit dem Planetenradträger (2.3.1) über Elektromagnet (6.3) gekuppelt wird, dreht der Planetenradträger (2.3.1) mit der Drehzahl des Orbitalrades (1.5) um die Zentralachse (2.1). Dadurch erfolgt in dieser Stufe keine Übersetzung, - die Stufe ist überbrückt. Die Schaltfolgen der Elektromagnete(6.3) mehrerer Stufen sind durch SPS ansteuerbar.
**2.3** Einsatz des Orbitalgetriebes in den Anwendungsgebieten : Straßennutzfahrzeuge, Schienenfahrzeuge, Wasserfahrzeuge, Fördertechnik, Werkzeugmaschinen, Energieerzeugung, Standardanwendungen der Antriebstechnik

## Beschreibung

### Stand der Technik

"Zur Drehzahlanpassung und Drehmomentwandlung zwischen Kraftmaschine und Arbeitsmaschine sind Getriebe erforderlich. Bei wechselnden Betriebszuständen, insbesondere der Arbeitsmaschine, bietet sich der Einsatz von stufenlosen Getrieben an, um die Zusammenarbeit von Kraftmaschine und Arbeitsmaschine optimal zu gestalten und um die installierte Antriebsleistung immer als Arbeitsleistung voll ausnutzen zu können. In den Anwendungsfällen, in denen entweder Übersetzungsbereich, Wirkungsgrad, Lebensdauer oder Leistungsgewicht von stufenlosen Getrieben nicht befriedigend sind, ergibt sich durch den Einsatz von Schaltgetrieben (Stufengetrieben) ein brauchbarer Kompromiß. Bei Schaltgetrieben kann die Gesamtübersetzung durch äußeren Eingriff stufenweise geändert werden. Wird nur eine Drehrichtungsumkehr geschaltet, dann spricht man von Wendegetrieben."¹⁾

Bei Fahrzeugen muß die "Getriebekonzeption (...) daher immer das Fahrzeug, die Motorcharakteristik und den Einsatzzweck berücksichtigen.
Die Festlegung der Zwischengänge in der Weise, daß die unter der idealen Zugkrafthyperbel liegende Fläche (das entspricht der ausnutzbaren Leistung) ein Maximum wird, führt auf eine in etwa geometrische Stufung. In der Praxis weicht man davon ab und legt die unteren Zwischengänge mit einem größeren und die oberen Zwischengänge mit einem kleineren Übersetzungssprung aus.(...) Fahrzeuggetriebe mit hoher Gangzahl, die aus einem Hauptgetriebe und einer vor- oder nachgeschalteten Zahnradstufe bestehen und als Gruppengetriebe arbeiten, lassen sich nicht progressiv stufen, sondern erfordem eine nahezu geometrische Stufung, um beim Durchschalten aller Gänge nicht ungleichmäßig abwechselnd große und kleine Übersetzungssprünge zu erhalten." ²⁾

"Schaltgetriebe können als Parallelwellengetriebe oder als Planetengetriebe ausgeführt werden. (...) In Planetengetrieben werden durch Festbremsen oder Lösen unterschiedlicher Getriebeglieder die gewünschten Übersetzungen erreicht. Mit steigender Gangzahl wächst die Vielzahl der Ausführungsformen und nimmt der Aufwand für die Schaltmittel in Abhängigkeit von der Schaltung zu." ³⁾

Bei Nutzfahrzeugen werden " Vorgelegegetriebe (...) bis zu sechs Gängen als Eingruppengetriebe gebaut, in denen jedes Radpaar mit Ausnahme der Antriebskonstante nur in einem Gang genutzt wird. (...) Bei Mehrgruppengetrieben ergibt sich durch die mehrfache Benutzung einzelner Radpaare eine Erhöhung der Gangzahl. Nutzfahrzeugge-triebe mit hoher Gangzahl werden immer als Mehrgruppengetriebe ausgeführt. In der Praxis haben sich zwei Bauarten durchgesetzt: Vorschaltgruppe, die als sogenannter Splitter die Gangsprünge des Hauptgetriebes unterteilt. Damit ergibt sich eine enge Getriebestufung.(...) Nachschaltgruppe, die ein zweimaliges Durchfahren des Hauptgetriebes erlaubt und damit den Getriebebereich vergrößert und die Gangzahl verdoppelt. (...) In automatischen Fahrzeuggetrieben (Getriebe mit vollautomatisch gesteuerter Schaltung der Gangwechsel unter Last) haben sich als Stufengetriebe Planetengetriebe durchgesetzt. (...) Beim Einsatz von Planetengetrieben in Werkzeugmaschinengetrieben ist wegen der Gleichachsigkeit von Antrieb und Abtrieb nur ein axiales Aneinanderreihen der Teilgetriebe sinnvoll. Antrieb und Abtrieb müssen immer an der innersten von mehreren konzentrischen Wellen liegen, denn nur so können an den anderen Wellen Kupplungen und Bremsen angreifen. Durch beide Bedingungen wird der Getriebeaufbau oft erheblich kompliziert." ⁴⁾

"Die Anforderungen an eine Schaltung unter Last sind: die Drehzahlen sollen sich gleichmäßig und einsinnig ändern, das Drehmoment am Getriebeabtrieb soll sich möglichst gleichmäßig ändern, die Verlustleistung während der Schaltung soll möglichst gering sein und die Beschleunigungsänderung am Abtrieb soll möglichst klein sein.(...) Für die Abstimmung der Schaltung unter Last gibt es im Prinzip drei Möglichkeiten:
1. Schaltung mit negativer Überschneidung, d.h. die Kupplung des vorhergehenden Ganges wird gelöst, bevor die Kupplung des zugeschalteten Ganges das volle Drehmoment überträgt.
2. Schaltung ohne Überschneidung, d.h. die Kupplung des vorherigen Ganges wird abgeschaltet, wenn die Kupplung des zugeschalteten Ganges das volle Antriebsmoment übertragen kann.
3.Schaltung mit positiver Überschneidung, d.h. die Kupplung des vorherigen Ganges bleibt noch betätigt, obwohl die Kupplung des zugeschalteten Ganges bereits schlupfend das volle Antriebsmoment überträgt. Die Wärmeentwicklung in den Schaltelementen ist bei einer Schaltung ohne Überschneidung am geringsten. Diese Art der Schaltung erfordert aber eine sehr genaue Schaltungsabstimmung der Servoglieder. Die während der Schaltung unter Last entstehende Wärme ist um so kleiner, je kleiner die Motordrehmasse, der Gangsprung, die Motorleistung und die Schaltzeit sind.(...) Die Schaltung unter Last mit Gruppenwechsel erfordert eine sehr sorgfältige Abstimmung von Lösen und Zuschalten der einzelnen Schaltelemente, um eine erhöhte Wärmebelastung der Reibglieder zu vermeiden." ⁵⁾

Es finden als Schaltmittel für Fahrzeuggetriebe Anwendung:
"(...)
g) kraftschlüssige Kupplung, Lamellenkupplung für die Schaltung unter Last;
h) kraftschlüssige Bremsen für die Schaltung unter Last von Planetengetrieben Bei automatisch schaltenden Fahrzeuggetrieben werden als Schaltelemente - in den einzelnen Getrieben unterschiedlich miteinander kombiniert - Lamellenkupplungen, Lamellenbremsen, Bandbremsen und Freiläufe verwendet. Die Lamellenkupplungen und Lamellenbremsen haben, damit die Getriebe nicht zu groß werden, begrenzte Durchmesser und eine große Zahl von Lamellen. Die Haltbarkeit der Lamellen hängt ab von der Flächenpressung, der spezifischen Wärmebelastung der Oberfläche und dem Temperaturanstieg während der Schaltung. Die Bremsbänder arbeiten mit dem bekannten Selbstverstärkereffekt. Sie bauen platzsparend und ermöglichen eine gute Wärmeabfuhr. Sie übertragen aber in Abhängigkeit von der Drehrichtung der Bremsbandtrommel unterschiedlich große Drehmomente und reagieren empfindlich auf Reibwertschwankungen. Für die größeren Abstützmomente im Rückwärtsgang werden teilweise doppelt umschlingende Bremsbänder verwendet.

Die Betätigung der Reibelemente erfolgt im Prinzip so, daß Öldruck auf einen Kolben gegeben wird, der sich gegen die Wirkung von Rückdruckfedern so lange verschiebt, bis er die Lamellen zusammengepreßt bzw. das Bremsband an die Bremsbandtrommel angelegt hat. Die Höhe des zu übertragenden Drehmoments hängt von der Größe des Anpreßdruckes ab, der in Abhängigkeit vom Motormoment gesteuert wird.

Der Einsatz von Freiläufen vereinfacht die Abstimmung der Schaltung unter Last (Zugkraftschaltung). Durch Zuschalten zusätzlich angeordneter Lamellenbremsen oder Bandbremsen ist beim Überrollen der Freiläufe im Schubbetrieb eine Fahrzeugabbremsung über den Motor möglich. Ohne diese Bremsen besteht zwischen den antreibenden Fahrzeugrädern und dem Motor über das Getriebe keine Verbindung, da bei Schubbetrieb die Freiläufe abheben. (...)

Bei Lastschaltgetrieben müssen darüber hinaus Schaltzeit und Schaltgüte so aufeinander abgestimmt sein, daß einerseits die Schaltungen nicht zu hart (Komfortschaltungen in Fahrzeuggetrieben) und andererseits die Servoglieder nicht zu stark belastet werden (Schlupfwärme, Verschleiß)." ⁶⁾

"Um Schlepper bei den sehr unterschiedlichen Betriebsbedingungen (im Einsatz) (...) rationell einsetzen zu können, ist eine genügend hohe Zahl leicht schaltbarer Gänge notwendig. (...) (Es gibt z.B.) folgende Möglichkeiten der Gangauswahl: Vorwärtsfahrgruppe mit zwölf Gängen (sechs Normal- und sechs Zwischengänge), Rückwärtsfahrgruppe mit sechs Gängen und Kriechganggruppe auf Wunsch mit zwei mal zwei Vorwärts- und zwei Rückwärtsgängen. (...) Das Schaltgetriebe wird mit einem Haupt und einem Gruppenschalthebel bedient, die direkt in das Getriebe eingreifen. (...) Die Kriechgänge werden über einen getrennten Schalthebel bedient." ⁷⁾

"Beim Einsatz von Wendegetrieben in Wasserfahrzeugen bietet die Umsteuerung von Vorwärts- und Rückwärtsfahrt oft die einzige Möglichkeit zum Bremsen und Manövrieren. (...) Bei Wendegetrieben werden, wenn keine andere Bremse vorhanden ist, die Drehmassen von der gegenlaufenden Lamellenkupplung erst auf die Drehzahl Null verzögert und dann wieder auf die Nenndrehzahl beschleunigt. Die Lamellenkupplung ist in einem Wendegetriebe schon bei unbelastetem Antrieb durch diesen Umschaltvorgang einer vierfachen Wärmebelastung ausgesetzt im Vergleich zu einem einfachen Anlaufvorgang. Die bei einer Schaltung unter Last anfallende Schaltwärme belastet die Wendekupplung noch zusätzlich." ⁸⁾

Ein weiteres Ausführungsbeispiel ist " ein achtstufiges Werkzeugmaschinengetriebe in Planetenbauweise mit zwei einfachen Planetensätzen und einem Planetensatz mit Stufenplaneten und zwei Sonnenrädem. Das Getriebe hat bei einem Stufensprung von 1,41 acht Abtriebsdrehzahlen im Bereich von 185 bis 2046 min⁻¹. (...) Die einzelnen Übersetzungen werden mit Hilfe von drei Lamellenkupplungen und drei Lamellenbremsen, die elektromagnetisch betätigt werden, geschaltet. Neben den acht Übersetzungen sind eine Brems- und eine Leerlaufstellung bei durchlaufendem Motor vorhanden. Das Getriebe ist für beide Drehrichtungen geeignet, so daß eine Reversierung mit dem Motor möglich ist. Das Planetengetriebe arbeitet als Gruppengetriebe, das heißt, man erhält die jeweilige Gesamtübersetzung durch Multiplikation von Einzelübersetzungen. Dazu benötigt jeder Planetensatz eine Lamellenbremse und eine Lamellenkupplung. Durch Zuschalten der Lamellenbremse arbeitet der einzelne Planetensatz als Übersetzungsgetriebe, durch Betätigen der Lamellenkupplung wird er überbrückt." ⁹⁾

Unabhängig von der zuvor skizzierten Vielfalt der Ausführungsformen und Bauformen von Getrieben ist ein weiterer wichtiger Aspekt zur Funktionalität eines Getriebes das Getriebegehäuse als " Behälter mit zahlreichen Funktionen. Erstens dienen sie dazu, die Wellen in ihren Lagergehäusen zu stützen. Zweitens enthalten sie den Schmierstoff, und drittens dienen sie zur Befestigung der Zahnradantriebe an ihren Antriebsstellen."¹⁰⁾ Um ihre, unter erstens beschriebene, Hauptfunktion wahrzunehmen, " um Lager stützen zu können und Reaktionen auf die Untergestelle zu übertragen, müssen sich die Gehäuse Verformungen widersetzen. Die Gehäuseverformungen erzeugen einen Wellenversatz der Welle und in Folge dessen eine Verminderung der Belastungsfähigkeit der Zahnräder. Die Berechnung von Gehäusen ist ziemlich kompliziert, weil ihre Formen kompliziert sind. Man kann sie als Ebenen betrachten, die die Druckspannungen oder Zugspannungen unterstützen. Dieses Verfahren ist approximativ, und die Berechnung soll mit hohen Sicherheitsfaktoren durchgeführt werden. Es ist sehr schwer, ihre Verformung vorauszusehen. Es können auch Probleme in Bezug auf die Vibrationen auftreten."¹¹⁾

Daraus ergibt sich, das "Gehäuse (...) strengen Vorschriften (unterliegen), die sich aus ihren Einbaufunktionen für Lager und Achsen ergeben. Man muß also beachten, daß die Lagerposition mit der nötigen Genauigkeit verwirklicht wird (...), damit auch die Parallelität der Achsen (...) und die Genauigkeit der Achsabstände gewährleistet ist. Auch die Abmessungen der Achsen über der Befestigungsoberfläche müssen beachtet werden, so daß der Zusammenbau mit den Gegenmaschinen korrekt durchgeführt werden kann; die Oberflächen der verschiedenen Teile und Deckel müssen geglättet sein."¹²⁾

Die Datenbank **PATOS** (Deutsches Patentamt) wurde unter Verwendung folgender Suchbegriffe auf Einträge abgefragt:
Suchbegriff: "Getriebe* UND Planet* UND Schaltbar* UND Elektr*"
Ergebnis:
1980 bis 1990 : 1 Eintrag
DE 35 44 304 A1 "Elektrisch schaltbares 2-gaengiges Untersetzungsgetriebe für Haushaltshandrührgeräte, -kuechenmaschinen und andere motorische Geraete"
Anmelder: Entwicklungsgesellschaft für Haushaltstechnik mbH, (7340) Geislingen 1991 bis heute: 3 Einträge
DE 39 38 080 A1 "Antriebseinrichtung in einem Omnibus"
Anmelder: MAN Nutzfahrzeuge AG, (8000) München
DE 19 60 6771 A1 "Hybridantrieb, insbesondere für Kraftfahrzeuge"
Anmelder: Bayerische Motoren Werke AG, 80809 München
DE 40 38 226 A1 "Handgeführtes Kraftdrehwerkzeug"
Anmelder: Robert Bosch GmbH, (7000) Stuttgart

Suchbegriff: "Getriebe* UND Umlaufr* UND Schaltbar* UND Elektro*"
Ergebnis :
1980 bis 1990 kein Eintrag
1991 bis Heute : 1 Eintrag
DE 41 32 873 C2 "Selbsttaetige Schaltvorrichtung eines Gangwechselgetriebes der Umlaufraederbauart mit einem durch Druckmittelbetaetigung einrueckbaren reibschluessigen Schaltmittel (Kupplung oder Bremse)
Anmelder: Mercedes-Benz Aktiengesellschaft, 70327 Stuttgart

Suchbegriff: "Getriebe* UND Umlaufraeder* UND Schaltbar"
1980 bis 1990 : 1 Eintrag
DE 29 13 824 A1
1990 bis heute: 2 Einträge
DE 38 25 733 C2 " Umlaufraedergetriebe für ein automatisches Getriebe"
Anmelder: Nissan Motor Corp,,Ltd., Yokohama, Kanagawa
DE 41 32 873 C2 " Automatisches Stufenschaltgetriebe für Kraftfahrzeuge"
Anmelder: Klaue, Hermann, Dr.-lng.,(3302) Cremlingen

Suchbegriff: "Getriebe* UND Schaltbar* UND Elektro*"
1980 bis heute : mehrere Einträge
Auswahl:
DE 38 01 362 A1 "Steuereinrichtung für hydraulisch betätigte Fahrzeuggetriebe"
Anmelder: Honda Giken Kogyo K.K., Tokio
DE 29 13 824 "Verfahren zum Ermitteln des Freilaufpunkts und Getriebe mit Messvorrichtung"
Robert Bosch GmbH, 7000 Stuttgart
DE 37 01 744 "Vorrichtung zum Abbremsen eines Getriebeelementes"
Deere & Co., Moline, III.,US,Niederlassung Deere& Co. European Office, (6800) Mannheim
DE 30 29 050 C2 "Verfahren zur Abschaltung eines Stirnrad-Wendegetriebes zur Vermeidung von Unfaellen bei landwirtschaftlichen Arbeitsmaschinen"
Anmelder: VEB Kombinat Fortschritt Landmaschinen Neustadt in Sachsen, (DDR 8395) Neustadt

### Quellenverzeichnis:

1) Dipl.-lng. J. Pickard, "2. Schaltgetriebe" in
   Anwendungen der Antriebstechnik, Band III : Getriebe,
   Gesamtbearbeiter : Dr.-lng. O. Dittrich, Dipl.-lng. R. Schumann
   ISBN 3-7830-0091-2
   1974, Otto Krausskopf-Verlag GmbH, Mainz
   Seite 247
2) a.a.O. Seite 248
3) a.a.O. Seite 249
4) a.a.O. Seite 250 ff
5) a.a.O. Seite 254 f
6) a.a.O. Seite 256 ff
7) a.a.O. Seite 269
8) a.a.O. Seite 272
9) a.a.O. Seite 274 ff
10) Prof. Hon.-Eng. Jacques Sprengers, "Gehäuse" in
   Handbuch der Getriebemotoren
   Bonfiglioli Riduttori S.p.A. (Hrsg.)
   ISBN 3-540-60977-6
   Berlin; Heidelberg; New York; Barcelona; Budapest; Hongkong; London;
   Mailand; Paris; Santa Clara; Singapur; Tokio : Springer, 1997
   Seite 286
11) a.a.O. Seite 287
12) a.a.O. Seite 292

### Problemstellung:

Konzeption eines Umlaufrädergetriebes, daß das "Wellenprinzip" der Zahnradanordnung verläßt und mit einem "Zentralachsenprinzip" der Zahnräder ermöglicht, ein einfach zu bedienendes und elektrisch angesteuertes Schaltgetriebe zu bauen.

### Problemlösung:

Das Problem wird durch die in Schutzanspruch (1) und (3) angegebenen Merkmale gelöst.

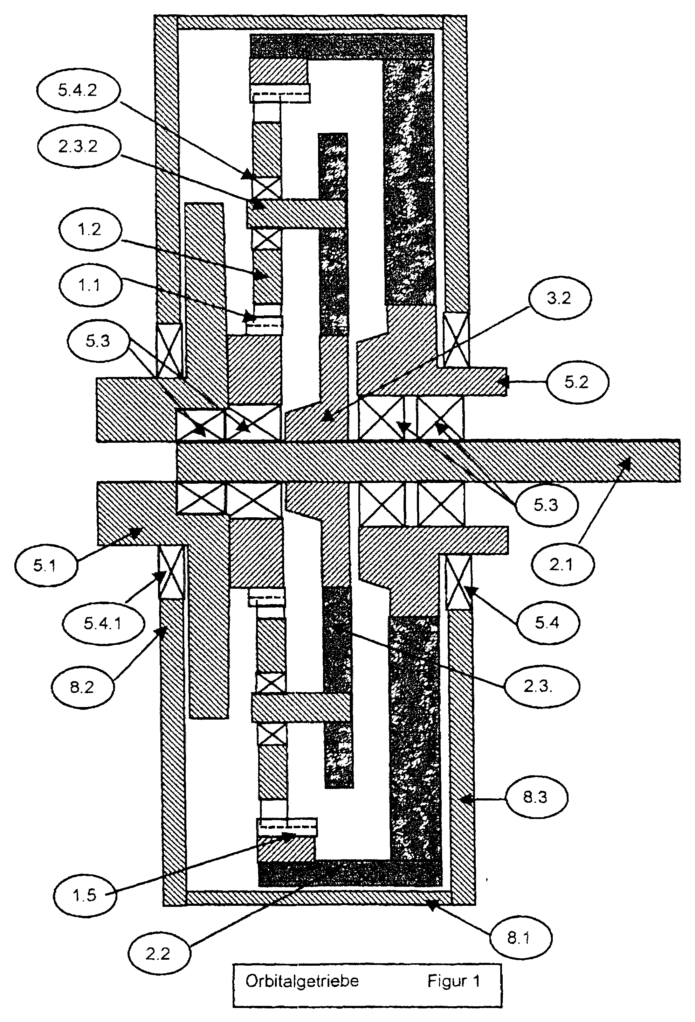

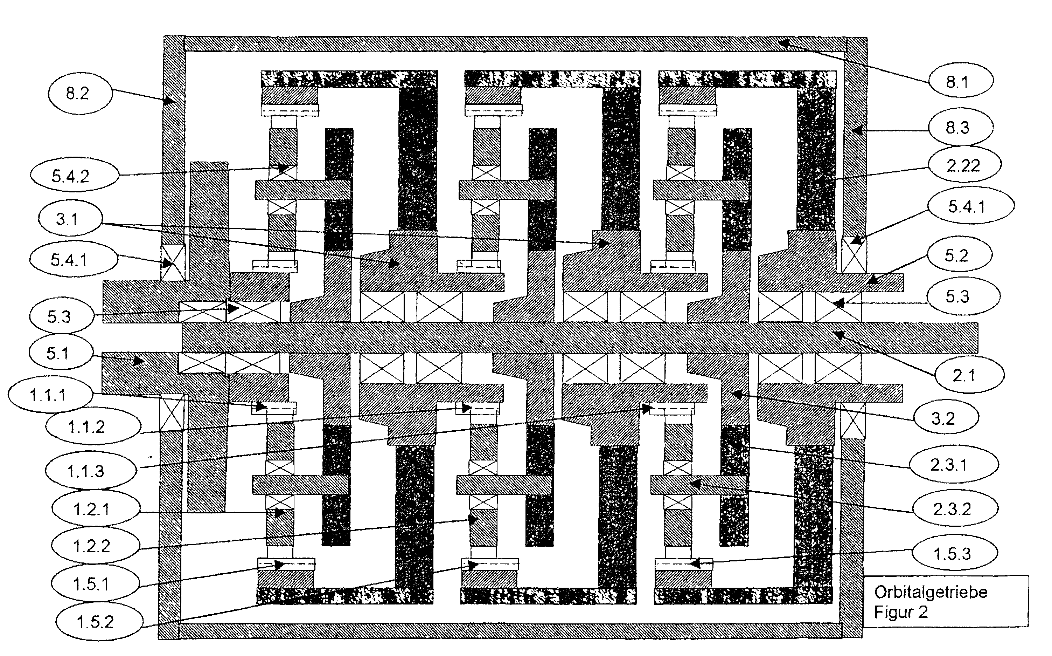

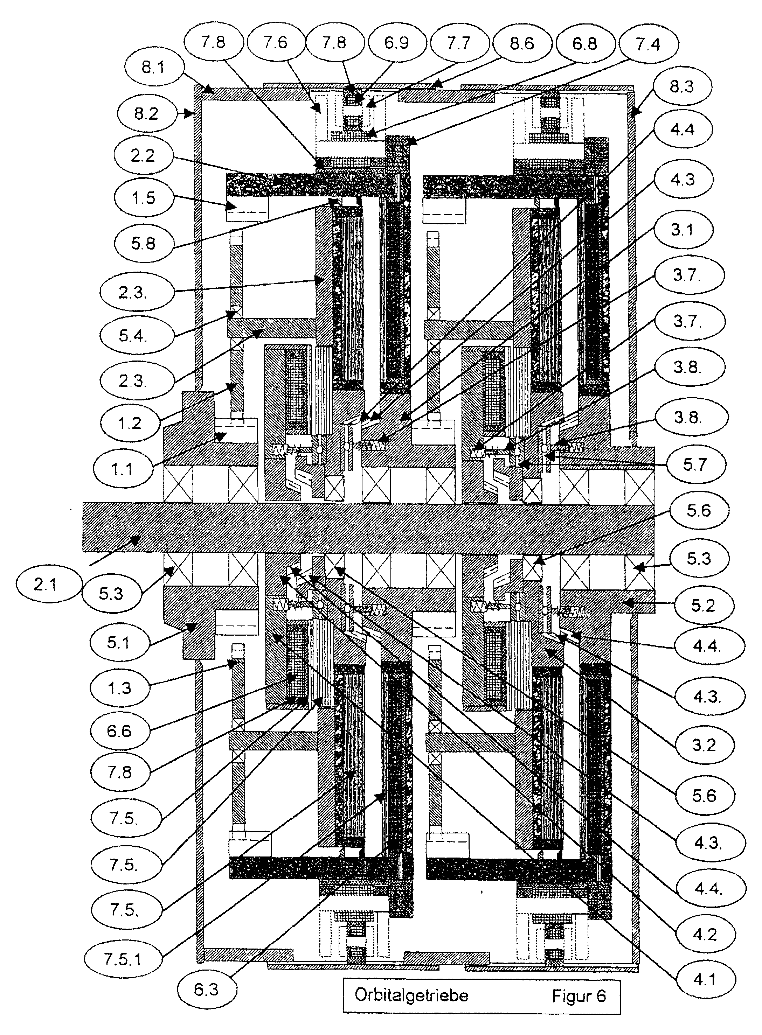

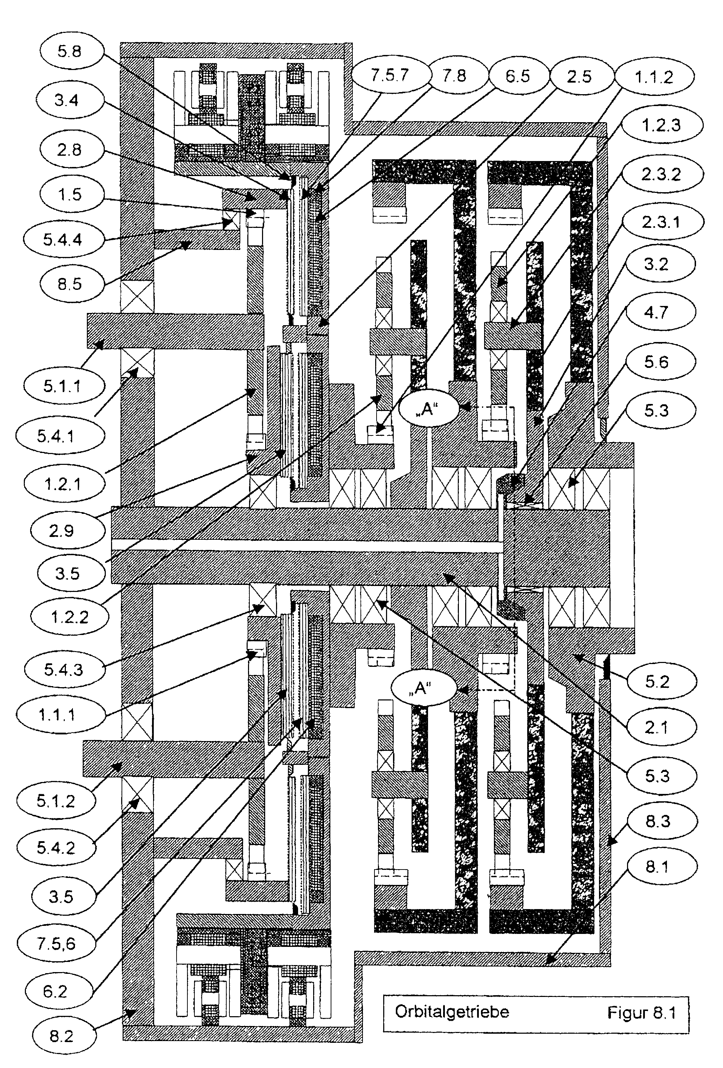

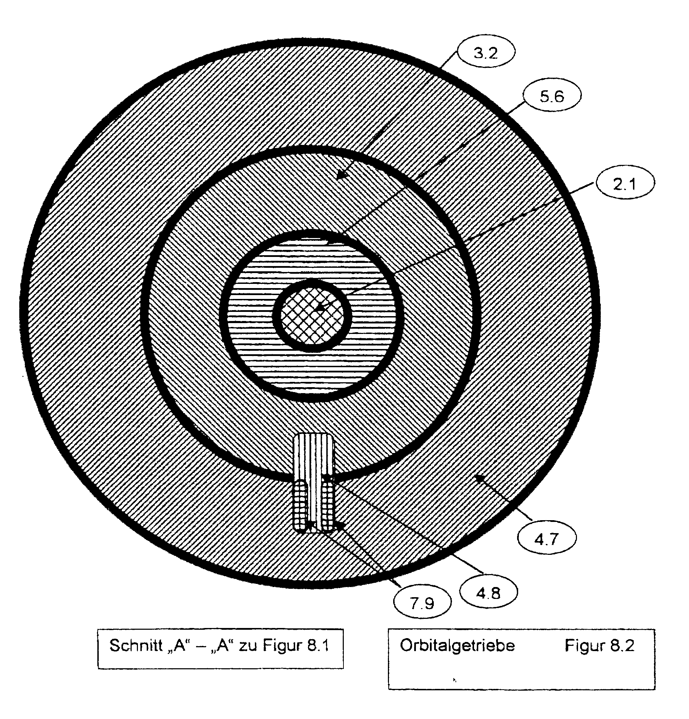

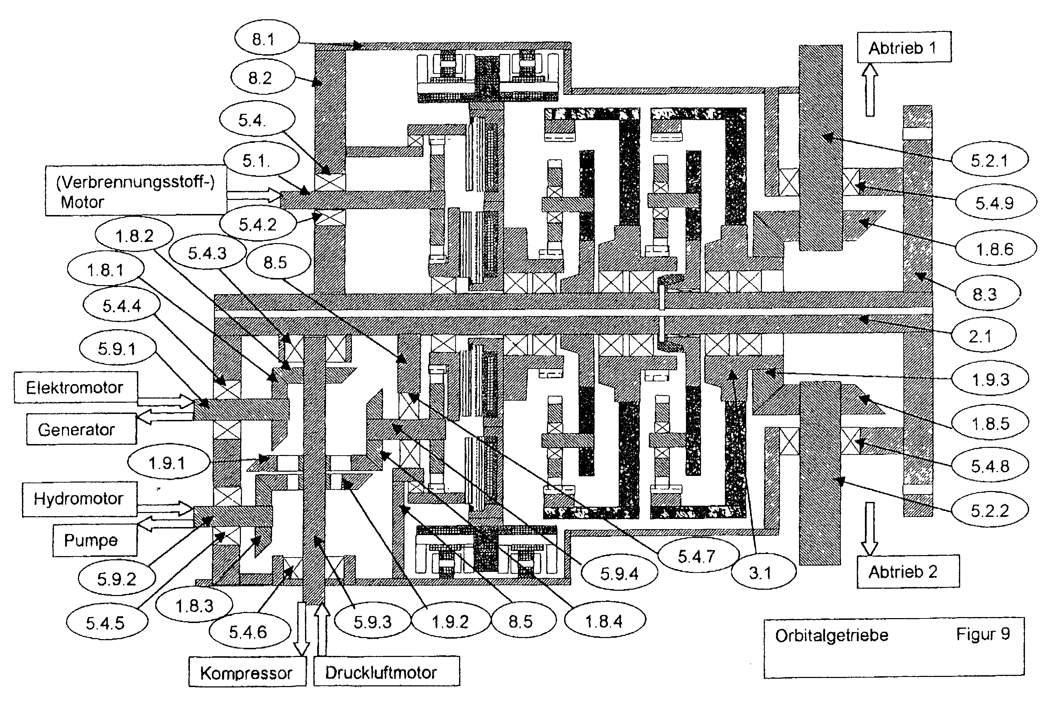

### Beschreibung zu den Ausführungsbeispielen der Figur 1 bis Figur 10 Allgemeine Vorbemerkung:

Die Erläuterung der Getriebe geht vom "Motorprinzip" aus, das heißt, die antreibende Welle hat in der Regel eine höhere Drehzahl als die abtreibende Welle. Bei Getrieben, die im Generatorbetrieb genutzt werden, gilt sinngemäß der umgekehrte Vorgang. In der Praxis werden in der Regel mindestens drei Planetenräder pro Planetenträger zur Anwendung kommen. Da dieses Konstruktionsprinzip für das Verständnis der Funktionsweise unerheblich ist, wird in den Beschreibungen nicht weiter darauf eingegangen.

### Vorbemerkung zu Schaltmittel:

In den erläuterten Figuren 1 bis 10 sind als Schaltmittel elektromagnetische, federdruckbelastete kraft- oder formschlüssig wirkende Scheibenkupplungen eingesetzt.

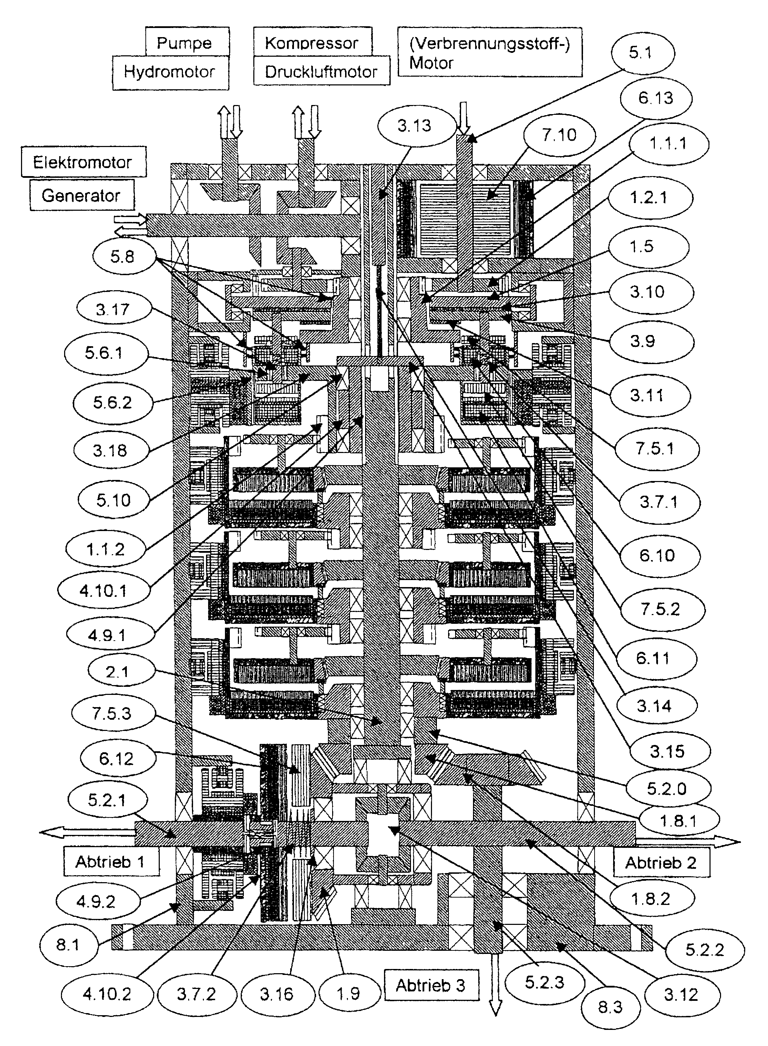

Abhängig von den erforderlichen Schaltkräften und dem jeweiligen Anwendungsfall ist der Einsatz von Hydraulikzylinder, Pneumatikzylinder, elektromotorische Stellantriebe (Gewindespindel-Mutter-Systeme), elektrohydraulische Drücker, mechanische Hebel mit (Teleskop-) Schiebestangen - Systemen ebenfalls möglich. Diese wirken dann aus dem Inneren der zentralen Achse auf den zu schaltenden Planetenradträger. In Figur 10 ist eine derartige Möglichkeit beispielhaft dargestellt.

### Begriffe, Gruppierung und Nummerierung

1. Rad
   - 1.1: Sonnenrad
   - 1.2: Grundplanetenrad
   - 1.3: Richtungsplanetenrad
   - 1.4: Tandemplanetenrad
   - 1.5: Orbitalrad
   - 1.6: Vollrad
   - 1.7: Hohlrad
   - 1.8: Kegelrad
   - 1.9: Tellerrad
2. Träger
   - 2.1: Zentralachse
   - 2.2: Orbitalradträger
   - 2.3.1: Planetenradträger
   - 2.3.2: Planetenradachse
   - 2.4: Spulenträger
   - 2.5: Ringspulenträger
   - 2.6: Hohlradankerplattenträger
   - 2.7: Vollradankerplattenträger
   - 2.8: Orbitaldurchtriebplattenträger
   - 2.9: Sonnendurchtriebplattenträger
3. Transmissionsteile
   - 3.1: Orbitalradträgernabe
   - 3.2: Planetenradträgernabe
   - 3.3: Ringspulenträgernabe
   - 3.4: Orbitaldurchtriebplatte
   - 3.5: Sonnendurchtriebplatte
   - 3.6: Antriebswellenkragen
   - 3.7: Druckfeder
   - 3.8: Druckbolzen
   - 3.9: Kupplungsplatte
   - 3.10: Orbitalreibbelag
   - 3.11: Sonnenreibbelag
   - 3.12: Kegelrad-Ausgleichgetriebe
   - 3.13: Druckzylinder
   - 3.14: Kolbenstange
   - 3.15: Druckring
   - 3.16: Druckkragen
   - 3.17: Mitnehmerstift
   - 3.18: Mitnehmerkragen
4. Reaktionsteile
   - 4.1: Haltering
   - 4.2: Halteringnabe
   - 4.3: Nabenkegelradverzahnung
   - 4.4: Nabenkegelradgegenverzahnung
   - 4.5: Hohlradankerplatte
   - 4.6: Vollradankerplatte
   - 4.7: Drehmomentstützring
   - 4.8: Drehmomentstützplatte
   - 4.9: Vielfachverzahnung
   - 4.10: Schiebehülse
5. Wellen und Lager
   - 5.1: Antriebswelle
   - 5.2: Abtriebswelle
   - 5.3: Hauptlager (als Wälz- oder Gleitlager)
   - 5.4: Wälzlager
   - 5.6: Gleitlager
   - 5.7: Axialrollenlager
   - 5.8: Wellendichtring
   - 5.9: Welle, allgemein
   - 5.10: Kegelrollenlager
6. Elektrotechnische Spule
   - 6.1: Vollradankerspule
   - 6.2: Sonnenringspule
   - 6.3: Orbitalspule
   - 6.4: Hohlradankerspule
   - 6.5: Orbitalringspule
   - 6.6: Halteringspule
   - 6.7: Magnetspule
   - 6.8: Transformatorspule
   - 6.9: Spule, allgemein
   - 6.10: Freilaufspule
   - 6.11: Reversierspule
   - 6.12: Sperrspule
   - 6.13: Statorspule
7. Elektrotechnische Teile
   - 7.1: Schleifring
   - 7.2: Bürste
   - 7.3: Bürstenhalter
   - 7.4: Brückengleichrichter
   - 7.5: Elektromagnetblechpaket
   - 7.6: U-Blechpaket
   - 7.7: Joch
   - 7.8: Isolierung
   - 7.9: Druckmeßstreifen
   - 7.10: Stator
8. Gehäuse
   - 8.1: Getriebegehäuse
   - 8.2: antriebsseitiges Lagerschild
   - 8.3: abtriebsseitiges Lagerschild
   - 8.4: Gehäusesteg
   - 8.5: Gehäuseschulter
   - 8.6: Gehäusedeckel
   - 8.7: Schraubflansch

### Beschreibung zu Figur (1)

Die Antriebswelle **5.1**, die aus dem antriebsseitigen Lagerschild **8.2** des Getriebegehäuses **8.1** herausgeführt ist, ist mit einem außenverzahnten Sonnenrad **1.1** mechanisch starr verbunden und auf einer Zentralachse **2.1** mit Hauptlager **5.3** verlagert. Die Zähne des Sonnenrades **1.1** sind im Eingriff mit den Zähnen eines außenverzahnten Grundplanetenrades **1.2**. Das Grundplanetenrad **1.2** ist auf einer Planetenrad-achse **2.3.2** mit einem Wälzlager **5.4.2** verlagert.
Die Planetenradachse **2.3.2** ist auf dem Planetenradträger **2.3.1** befestigt, der über der Planetenradträgernabe **3.2** auf der Zentralachse **2.1** fixiert ist. Die Zähne des Grundplanetenrades **1.2** sind zudem im Eingriff mit den Zähnen eines innenverzahnten Orbitalrades **1.5**, das auf der Zentralachse **2.1** mit Hauptlager **5.3** verlagert ist. Die Abtriebswelle **5.2**, die über den Orbitalradträger **2.2** mechanisch starr mit dem Orbitalrad **1.5** verbunden ist, wird durch das abtriebseitige Lagerschild **8.3** hindurch nach außen geführt.
Für das Übersetzungsverhältnis der Stufe wird lediglich der Teilkreisdurchmesser von Sonnenrad **1.1** und Orbitalrad **1.5** definiert, der Teilkreisdurchmesser des Grundplanetenrades **1.2** ist eine daraus abgeleitete und konstruktiv angepaßte Größe. Die Antriebswelle **5.1** wird in eine rechtsdrehende Bewegung versetzt. Da das Grundplanetenrad **1.2**., auf seinen Mittelpunkt bezogen, ortsfest auf der Planetenradachse **2.3.2** mit Wälzlager **5.4.2** verlagert ist, wälzt es sich auf dem Sonnenrad **1.1** ab. Durch die linksdrehende Bewegung des Grundplanetenrades **1.2** wird das Orbitalrad **1.5** linksdrehend in Bewegung versetzt, wobei diese Drehbewegung langsamer ist als die des Sonnenrades **1.1**. Die Drehbewegung wird mittels Orbitalradträger **2.2** auf die Abtriebswelle **5.2** übertragen.

### Beschreibung zu Figur (2)

Der grundsätzliche Aufbau ist bei Figur (1) beschrieben.
Bei mehrstufigen Getrieben sind die Orbitalradträgernaben **3.1** der Stufen 1 bis n-1 mit einem Sonnenrad **1.1** starr verbunden, an der Orbitalradträgernabe **3.1** der n-ten Stufe ist die Abtriebswelle **5.2** befestigt, die durch das abtriebseitige Lagerschild **8.3** hindurch aus dem Getriebegehäuse herausgeführt ist.
Die Antriebswelle **5.1** wird durch eine Kraft in eine rechtsdrehende Bewegung versetzt. Dadurch dreht das Sonnenrad **1.1.1** ebenfalls rechts und treibt das Grundplanetenrad **1.2.1** linksdrehend mit einer Drehzahl, die umgekehrt proportional zu den Zähnezahlen der beiden Zahnräder ist. Die entstehenden Reaktionskräfte werden über Wälzlager
**5.4.2**, Planetenradachse **2.3.2**, Planetenradträger **2.3.1** und Planetenradträgernabe **3.2** in die Zentralachse **2.1** eingeleitet. Das linksdrehende Grundplanetenrad **1.2.1** treibt das Orbitalrad **1.5.1** und somit auch das mechanisch starr gekoppelte Sonnenrad **1.1.2** linksdrehend. In der nächsten Stufe erfolgt eine Drehrichtungsumkehr: Das linksdrehende Sonnenrad **1.1.2** treibt das Grundplanetenrad **1.2.2** rechtsdrehend, das rechtsdrehende Grundplanetenrad **1.2.2** treibt das Orbitalrad **1.5.2** und somit das Sonnenrad **1.1.3** rechtsdrehend. Dieser Vorgang wiederholt sich bei mehrstufigen Getrieben. Bei Getrieben mit ungerader Stufenanzahl ist die Drehrichtung der abtreibenden Welle **5.2** entgegengesetzt zur Drehrichtung der antreibenden Welle **5.1**; bei Getrieben mit gerader Stufenanzahl sind die Drehrichtungen von an- und abtreibender Welle gleich.
Das mehrstufige Getriebe arbeitet als Gruppengetriebe, die Gesamtübersetzung ist gleich der Multiplikation der Einzelübersetzungen der Stufen.

### Beschreibung zu Figur (3)

Der grundsätzliche Aufbau ist bei Figur (1) beschrieben. Abweichend von diesem Aufbau ist die Anordnung der Planetenräder. Mit dem Planetenradträger **2.3.1** ist die Grundplanetenradachse **2.3.2** und die Richtungsplanetenradachse **2.3.3** fest verbunden. Auf der Achse **2.3.2** ist mit Wälzlager **5.4.2** das Grundplanetenrad **1.2.1** ( 1.2.2 / 1.2.3 ) verlagert. Auf der Achse **2.3.3** ist mit Wälzlager **5.4.3** das Richtungsplanetenrad **1.3.1** ( 1.3.2 / 1.3.3 ) verlagert. Aufgrund der Achsabstände auf dem Planetenradträger ist z.B. das Grundplanetenrad **1.2.1** mit dem Sonnenrad **1.1.1** und zugleich mit dem Richtungsplanetenrad **1.3.1** in Zahneingriff, zudem befindet sich das Richtungsplanetenrad **1.3.1** mit dem Orbitalrad **1.5.1** im Zahneingriff.
Bei diesem Aufbau der Getriebestufen dreht auf einer rechtsdrehenden Antriebswelle **5.1**, das außenverzahnte Sonnenrad **1.1.1** rechts und treibt das außenverzahnte Grundplanetenrad **1.2.1** linksdrehend an. Das Grundplanetenrad **1.2.1** befindet sich im Zahneingriff mit dem außenverzahnten Richtungsplanetenrad **1.3.1** und treibt das Richtungsplanetenrad **1.3.1** rechtsdrehend an. Das rechtsdrehende Richtungsplanetenrad **1.3.1** treibt das innenverzahnte Orbitalrad **1.5.1** rechtsdrehend. Dadurch wird das Sonnenrad **1.1.2** in eine rechtsdrehende Bewegung versetzt. Dieses wirkt auf das Grundplanetenrad **1.2.2**, welches linksdrehend läuft, Richtungsplanetenrad **1.3.2** rechtsdrehend, Orbitalrad **1.5.2** rechtsdrehend. Sonnenrad **1.1.3** rechtsdrehend usw. . Die Antriebswelle, die Stufenausgänge und die Abtriebswelle haben konstant die gleiche Drehrichtung.

### Beschreibung zu Figur (4)

Bei einem einstufigen oder mehrstufigen Getriebe, das nach dem Funktionsprinzip von Figur (3) aufgebaut ist, befindet sich im Orbitalradträger **2.2** in einer Isoliermasse **7.8** eingebettet die Orbitalpule **6.3** . Auf der Umfangseite des Orbitalradträgers **2.2** sind, in einer Isoliermasse **7.8** eingebettet zwei Schleifringe **7.1** , die durch zwei Wellendichtringe **5.8.2** zwischen Orbitalradträger **2.2** und Getriebegehäuse **8.1** gegen das Eindringen von elektrisch nicht leitfähigen Schmiermitteln geschützt sind. In Kontakt mit den Schleifringen sind zwei Stromzufuhrbürsten **7.2**. Diese befinden sich in einem Bürstenhalter **7.3** , der mit dem Deckel **8.6** der Getriebegehäuseöffnung verbunden ist. Auf der, dem Orbitalradträger **2.2** gegenüberliegenden, Seite der Orbitalpule **6.3** ist eine Elektroblechplatte **7.5.1** angebracht. In einem sehr geringem Abstand (ca. 3 mm) dazu befindet sich ein Elektroblechpaket **7.5.2**, das mit dem Planetenradträger **2.3.1** verbunden ist.
Zum Erzeugen einer formschlüssigen statt einer kraftschlüssigen Verbindung zwischen Orbitalradträger **2.2** und Planetenradträger **2.3.1** kann das Elektroblechpaket **7.5.1** und **7.5.2** profiliert werden.
In der Orbitalradträgernabe **3.1**, die mit dem Hauptlager **5.3** auf der Zentralachse **2.1** verlagert ist, befinden sich, auf einem Teilkreis angeordnet, mehrere Sacklochbohrungen als Druckfederlager **4.9** in denen Druckfedem **3.7** angeordnet sind. Diese wirken über Druckbolzen **3.8** auf ein Axialrollenlager **5.7** das in der Planetenradträgernabe **3.2** eingebaut ist. Die Planetenradträgernabe **3.2** ist mit einer Kegelradverzahnung **4.3** versehen, die, im stromlosen Zustand der Orbitalspule **6.3**, in die Gegenverzahnung **4.4** des auf der Zentralachse **2.1** befestigten Halteringes **4.1** eingreift.
In dem Planetenradträger **2.3.1** mechanisch fest eingelassen sind Planetenradachsen **2.3.2** auf denen mittels Wälzlager **5.4.1** und **5.4.2** das Grundplanetenrad **1.2** und das Richtungsplanetenrad **1.3** verlagert sind.
Auf der Orbitalradträgernabe **3.1** ist in den Getriebestufen 1 bis n-1 ein Sonnenrad **1.1** befestigt. In der letzten Getriebestufe n ist die Orbitalradträgernabe **3.1** mit der Abtriebswelle **5.2** mechanisch fest verbunden. Mit dem glockenförmig über den Planetenradträger **2.3.1** auskragenden Orbitalradträger **2.2** ist das innenverzahnte Orbitalrad **1.5** mechanisch fest verbunden.
Ausgangspunkt der Beschreibung der Wirkungsweise ist die Beschreibung zu Figur (3) und stromloser Zustand der Orbitalspule **6.3**
In diesem Fall erfolgt eine Veränderung der Drehzahl zwischen antreibenden Sonnenrad **1.1** und abtreibenden Orbitalrad **1.5** . Da die Druckfedern **3.7** die Druckbolzen **3.8** gegen ein Axialrollenlager **5.7** drücken, können die Orbitalradträgernabe **3.1**, der Orbitalradträger **2.2** und das Orbitalrad **1.5** frei um die Zentralachse **2.1** laufen. Der Planetenradträger **2.3.1** ist über Planetenradträgernabe **3.2**, Nabenkegelradverzahnung **4.3** mit Gegenverzahnung **4.4** und dem Haltering **4.1** mit der Zentralachse **2.1** fest verbunden.
In dem Fall, das in der Orbitalspule **6.3** ein elektrischer Strom fließt, wird ein Magnetfeld aufgebaut, welches das Elektroblechpaket **7.5.2** des Planetenradträgers **2.3.1** zum Elektroblechpaket **7.5.1** hin gegen die Kraft der Druckfedem **3.7** anzieht und den Planetenradträger **2.3.1** mit dem Orbitalradträger **2.2** kraftschlüssig (oder formschlüssig bei profilierten Elektroblechpaket) verbindet. Dadurch erfahren der Planetenradträger **2.3.1** und die Planetenradträgernabe **3.2** eine axiale Verschiebung in Richtung Orbitalradträger **2.2** . Die Verbindung zwischen der Nabenkegelradverzahnung **4.3** und der Kegelradgegenverzahnung **4.4** des Halteringes **4.1** wird gelöst und der Planetenradträger **2.3.1** läuft mit der gleichen Drehzahl wie der Orbitalradträger **2.2** um die Zentralachse **2.1** . Das Grundplanetenrad **1.2** wird innerhalb der Verzahnung des Sonnrades **1.1** und das Richtungsplanetenrad **1.3** wird innerhalb der Verzahnung des Orbitalrades **1.5** ebenfalls axial verschoben, verläßt jedoch nicht den Zahneingriff. Da der Planetenradträger **2.3.1** mit der Drehzahl des Orbitalradträgers **2.2** und des Orbitalrades **1.5** umläuft, steht das Richtungsplanetenrad **1.3** still und somit ebenfalls das Grundplanetenrad **1.2** . Darausfolgend kann das abtreibende Sonnenrad **1.1**, das auf der vorgeschalteten Orbitalradträgernabe **3.1** angebracht ist das Grundplanetenrad **1.2** nicht antreiben. Die Stufe befindet sich, wie eine Steckachsenverzahnung, im Zustand "Durchtrieb".
Wenn der Strom zur Orbitalspule **6.3** abgeschaltet wird, baut sich das Magnetfeld ab. Die Druckfedern **3.7** verschieben über Druckbolzen **3.8** die Planetenradträgernabe **3.2** axial, so daß die Nabenkegelradverzahnung **4.3** in der Kegelradgegenverzahnung **4.4** des Halteringes **4.1** wieder zum Eingriff kommt. Die Stufe übersetzt wieder.

### Beschreibung zu Figur (5)

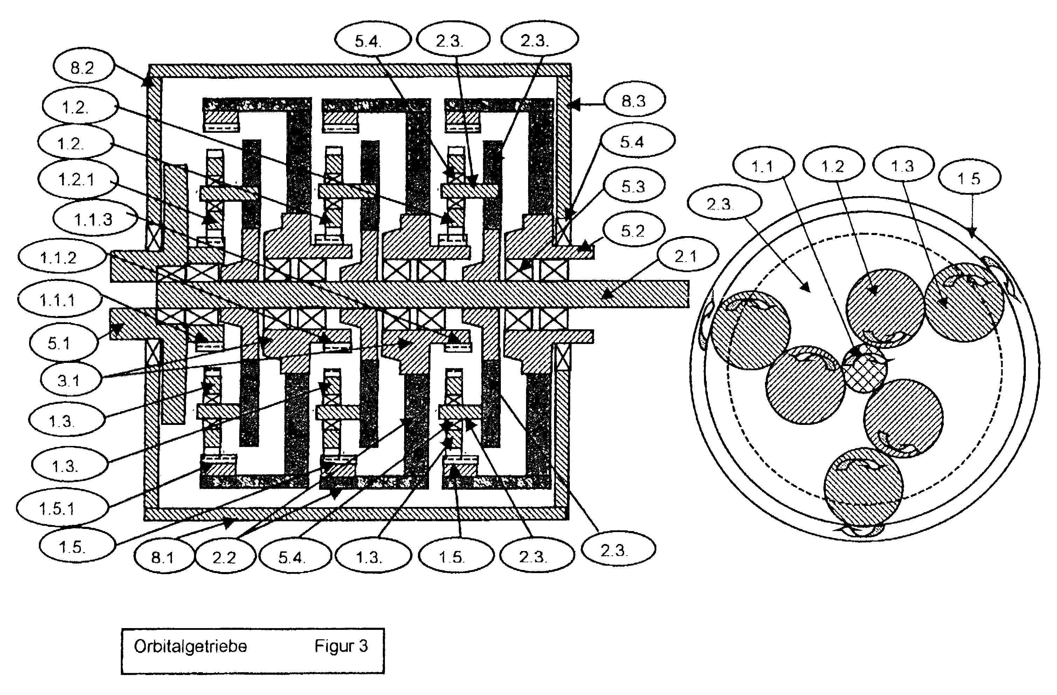

Bei einem einstufigen oder mehrstufigen Getriebe, das nach dem Funktionsprinzip von Figur 3 aufgebaut ist, befindet sich, mit der Zentralachse **2.1** mechanisch fest verbunden, ein Haltering **4.1** . In diesem Haltering **4.1** ist die Halteringspule **6.6** in einer Isoliermasse **7.8** eingebettet und mit einem Elektroblechpaket **7.5.4** abgeschlossen. Die Stromzufuhr zu der Halteringspule **6.6** erfolgt über eine fest verlegte Leitung , die in einer Nut (bei einer Vollachse) eingebettet oder (bei einer Rohrachse) im Rohrinneren geführt ist.
Zwischen der Halteringspule **6.6** und der Zentralachse **2.1** befinden sich in dem Haltering **4.1**, auf einem Teilkreis angeordnet, mehrere Sacklochbohrungen als Druckfederlager **4.9** in denen Druckfedern **3.7** angeordnet sind. Diese wirken über Druckbolzen **3.8** auf ein Axialrollenlager **5.7** das in der Planetenradträgernabe **3.2** eingebaut ist. Die gegenüberliegende Seite der Nabe **3.2** ist mit einer Kegelradverzahnung **4.3** versehen, die in die Gegenverzahnung **4.4** der Orbitalradträgernabe **3.1**, die auf der Zentralachse **2.1** mit dem Hauptlager **5.3** verlagert ist, eingreift, wenn sich die Halteringspule **6.6** im stromlosen Zustand befindet. In dem Planetenradträger **2.3.1** mechanisch fest eingelassen sind Achsen **2.3.2** auf denen mittels Wälzlager **5.4.1** und **5.4.2** das Grundplanetenrad **1.2** und das Richtungsplanetenrad **1.3** verlagert sind.
Auf der Orbitalradträgernabe **3.1** ist in den Getriebestufen 1 bis n-1 ein Sonnenrad **1.1** befestigt. In der letzten Getriebestufe n ist die Orbitalradträgernabe **3.1** mit der Abtriebswelle **5.2** mechanisch fest verbunden. Mit dem glockenförmig über den Planetenradträger **2.3.1** auskragenden Orbitalradträger **2.2** ist das innenverzahnte Orbitalrad **1.5** mechanisch fest verbunden.
Ausgangspunkt der Beschreibung der Wirkungsweise ist die Beschreibung zu Figur 3 und stromführender Zustand der Halteringspule **6.6** . In dem Fall, das in der Halteringspule **6.6** ein elektrischer Strom fließt, wird ein Magnetfeld aufgebaut, welches das Elektroblechpaket **7.5.3** des Planetenradträgers **2.3.1** gegen die Kraft der Druckfedem **3.7** anzieht und mit dem Haltering kraft- oder formschlüssig verbindet. Die Verbindung zwischen der Nabenkegelradverzahnung **4.3** des Planetenradträgers **2.3.1** und der Kegelradgegenverzahnung **4.4** der Orbitalradträgernabe **3.1** wird gelöst. In diesem Fall erfolgt eine Veränderung der Drehzahl zwischen antreibenden Sonnenrad **1.1** und abtreibenden Orbitalrad **1.5** . Wenn der Strom zur Halteringspule **6.6** abgeschaltet wird, baut sich das Magnetfeld ab. Die Druckfedern **3.7** verschieben über Druckbolzen **3.8** die Planetenradträgernabe **2.3.1** axial, so daß die Nabenkegelradverzahnung **4.3** in der Kegelradgegenverzahnung **4.4** der Orbitalradträgernabe **3.1** zum Eingriff kommt. Da die Druckfedern **3.7** die Druckbolzen **3.8** gegen ein Axialrollenlager **5.7** drücken, kann die Orbitalradträgernabe **3.1** zusammen mit dem Orbitalradträger **2.2**, dem Orbitalrad **1.5**, der Planetenradträgernabe **3.2**, dem Planetenradträger **2.3.1** und der Planetenradachse **2.3.2** frei um die Zentralachse **2.1** laufen. Das Grundplanetenrad **1.2** wird innerhalb der Verzahnung des Sonnrades **1.1** und das Richtungsplanetenrad **1.3** wird innerhalb der Verzahnung des Orbitalrades **1.5** ebenfalls axial verschoben. Da der Planetenradträger **2.3.1** mit der Drehzahl des Orbitalradträgers **2.2** und des Orbitalrades **1.5** umläuft, steht das Richtungsplanetenrad **1.3** still und somit ebenfalls das Grundplanetenrad **1.2** und darausfolgend hat das zugehörige Sonnenrad **1.1** ebenfalls die Drehzahl des Orbitalrades **1.5** . Die Stufe treibt wie eine Steckachsenverzahnung durch.

### Beschreibung zu Figur (6)

Bei einem einstufigen oder mehrstufigen Getriebe, das nach dem Funktionsprinzip von Figur (3) aufgebaut ist, befindet sich im Orbitalradträger **2.2** in einer Isoliermasse **7.8** eingebettet die Orbitalpule **6.3**. Auf der Umfangseite des Orbitalradträgers **2.2** befindet sich mindestens ein Brückengleichrichter **7.4** und mindestens einer Transformatorspule **6.8** mit einem U-förmigen Blechpaket **7.6** . Zwischen den offenenen Schenkeln des U-Blechpaketes befinden sich mit einem geringen Abstand mehrere querliegende Joche **7.7**, die im Inneren von Spulen **6.9** liegen, die über den inneren Gehäusedeckelumkreis **8.6** verteilt befestigt sind. Die Stromzufuhr erfolgt über Leitungen, die außerhalb des Getriebes liegen. Die Beschaltung der Orbitalspule **6.3** erfolgt von außen mittels induktiver Kopplung nach dem Transformatorprinzip: Wird den Spulen **6.9** von außen ein Wechselstrom zugeführt, so entsteht im Joch **7.7** ein wechselndes Magnetfeld, das,-über den minimalen Spalt zwischen den U-Schenkeln **7.6** und dem Joch **7.7** hinweg -, im U-Blechpaket **7.6** kurzgeschlossen wird. Dadurch wird in der Transformatorspule **6.8** eine Wechselspannung erzeugt. Die Wechselspannung wird in dem Brückengleichrichter **7.4** gleichgerichtet. Da in der Leitung zwischen Brückengleichrichter **7.4** und der jeweiligen Orbitalspule **6.3** kein Schaltglied ist, fließt ein Strom durch die jeweilige Orbitalspule **6.3** und erzeugt ein Magnetfeld. Zur Versorgungssicherheit und Leistungsaufteilung lassen sich mehrere Transformatoren und Brückengleichrichter auf dem Umfang des Orbitalradträgers **2.2** verteilt anordnen. Auf der, dem Orbitalradträger **2.2** gegenüberliegenden, Seite der Orbitalpule **6.3** ist ein Elektroblechpaket **7.5.1** angebracht. In einem sehr geringem Abstand (ca. 3 mm) dazu befindet sich ein Elektroblechpaket **7.5.2**, das mit dem Planetenradträger **2.3.1** verbunden ist.
In der Orbitalradträgernabe **3.1**, die mit dem Hauptlager **5.3** auf der Zentralachse **2.1** verlagert ist, befinden sich, auf einem Teilkreis angeordnet, mehrere
Sacklochbohrungen als Druckfederlager **4.9** in denen Druckfedern **3.7** angeordnet sind. Diese wirken über Druckbolzen **3.8** auf ein Axialrollenlager **5.7** das in der Planetenradträgernabe **3.2** eingebaut ist. Die Planetenradträgernabe **3.2** ist mit einer Kegelradverzahnung **4.3.2** versehen, deren Gegenverzahnung **4.4.2** sich an der Orbitalradträgernabe **3.1** befindet.
Mit der Zentralachse **2.1** mechanisch fest verbunden ist ein Haltering **4.1** . In diesem Haltering **4.1** ist die Halteringspule **6.6** in einer Isoliermasse **7.8** eingebettet. Die Stromzufuhr zu der Halteringspule **6.6** erfolgt über eine fest verlegte Leitung , die in einer Nut (bei einer Vollachse) eingebettet oder (bei einer Rohrachse) im Rohrinneren geführt ist.
Zwischen der Halteringspule **6.6** und der Zentralachse **2.1** befinden sich in dem Haltering **4.1**, auf einem Teilkreis angeordnet, mehrere Sacklochbohrungen als Druckfederlager **4.9** in denen Druckfedern **3.7** angeordnet sind. Diese wirken über Druckbolzen **3.8** auf ein Axialrollenlager **5.7** das in der Planetenradträgernabe **3.2** eingebaut ist. Die gegenüberliegende Seite der Nabe **3.2** ist mit einer Kegelradverzahnung **4.3.1** versehen, die in die Gegenverzahnung **4.4.1** der Halteringnabe **4.2** eingreifen kann.
Auf der Planetenradträgernabe **3.2** ist der Planetenradträger **2.3.1** befestigt, in dem mechanisch fest eingelassen die Planetenradachsen **2.3.2** sind, auf denen mittels Wälzlager **5.4.1** und **5.4.2** das Grundplanetenrad **1.2** und das Richtungsplanetenrad **1.3** verlagert sind.
Auf der Orbitalradträgernabe **3.1** ist in den Getriebestufen 1 bis n-1 ein Sonnenrad **1.1** befestigt. In der letzten Getriebestufe n ist die Orbitalradträgernabe **3.1** mit der Abtriebswelle **5.2** mechanisch fest verbunden. Mit dem glockenförmig über den Planetenradträger **2.3.1** auskragenden Orbitalradträger **2.2** ist das innenverzahnte Orbitalrad **1.5** mechanisch fest verbunden.

Ausgangspunkt der Beschreibung der Wirkungsweise ist die Beschreibung zu Figur 3 unter Betrachtung von vier möglichen Schaltzuständen zu jeder einzelnen Stufe.

| | | |
|---|---|---|
| Schaltzustand 1 | Orbitalspule **6.3** | ausgeschaltet |
| | Halteringspule **6.6** | ausgeschaltet |
| Schaltzustand 2 | Orbitalspule **6.3** | eingeschaltet |
| | Halteringspule **6.6** | ausgeschaltet |
| Schaltzustand 3 | Orbitalspule **6.3** | ausgeschaltet |
| | Halteringspule **6.6** | eingeschaltet |
| Schaltzustand 4 | Orbitalspule **6.3** | eingeschaltet |
| | Halteringspule **6.6** | eingeschaltet |

Im Schaltzustand 1 wollen die Druckfedern **3.7.2** des Halteringes **4.1**, die über Druckbolzen **3.8.2** auf das Axiallager **5.7** der Planetenradträgernabe **3.2** wirken, den Planetenradträger **2.3.1** axial auf seinem Gleitlager **5.6** verschieben. Gleichzeitig wollen die Druckfedern **3.7.1** der Orbitalradträgernabe **3.1**, die über Druckbolzen **3.8.1** auf das Axiallager **5.7** der Planetenradträgernabe **3.2** wirken, den Planetenradträger **2.3.1** entgegengesetzt axial auf seinem Gleitlager **5.6** verschieben. Die Federdimensionierungen sind so gewählt, daß die entgegengesetzt gerichteten Kräfte sich gegenseitig neutralisieren. Die Verbindungen sowohl zwischen der Nabenkegelradverzahnung **4.3.1** der Planetenradträgemabe **3.2** und der Kegelradgegenverzahnung **4.4.1** der Halteringnabe **4.2**, als auch zwischen der Nabenkegelradverzahnung **4.3.2** der Planetenradträgemabe **3.2** und der Kegelradgegenverzahnung **4.4.2** der Orbitalradträgemabe **3.1** sind gelöst. Der Planetenradträger **2.3.1** mit dem drehbar gelagerten Grundplanetenrad **1.2** und dem drehbar gelagerten Richtungsplanetenrad **1.3** kann dadurch auf seinem Gleitlager **5.6** frei um die Zentralachse **2.1** drehen. Gleichzeitig können sich Orbitalrad **1.5** und Sonnenrad **1.1** um die Zentralachse **2.1** drehen. Es kommt zu einer Überlagerung der Drehbewegungen, die in " Die Planetenrad-Umlaufrädergetriebe" beschrieben ist, und zu einer Erhöhung der Drehzahl des abtreibenden Orbitalrades gegenüber des antreibenden Sonnenrades führen. ¹³
¹³ Hugo Klein, VDI, "Die Planetenrad-Umlaufradergetnebe", Carl Hanser Verlag, München 1962,Vgl Seite 59 ff

### Schaltzustand 2

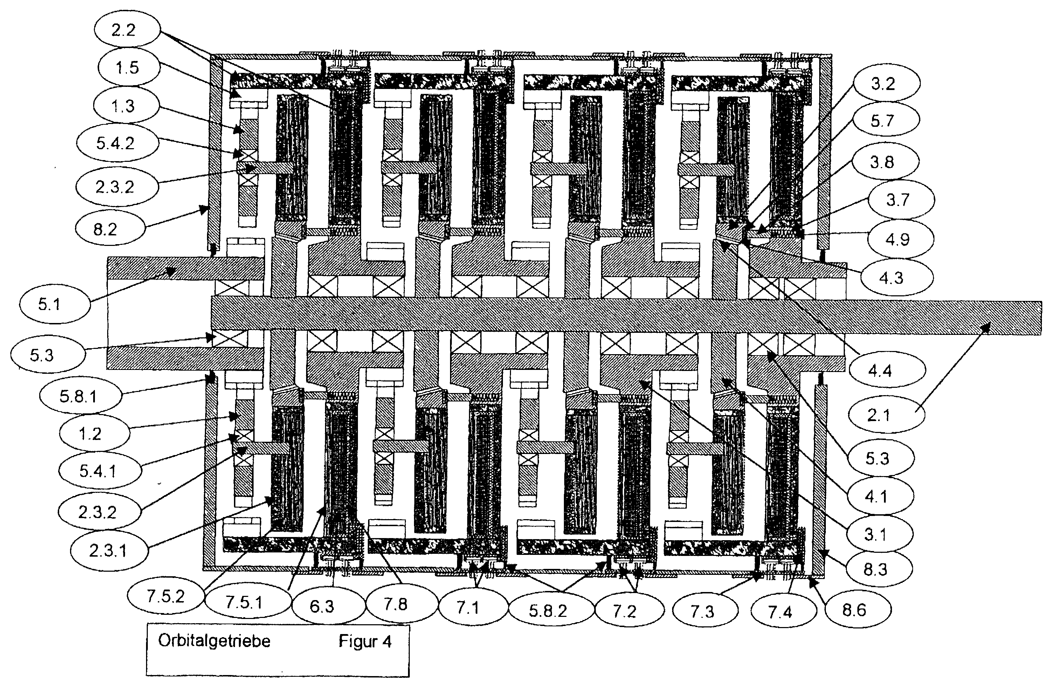

Die Funktionsweise in diesem Fall ist sinngemäß die gleiche wie in der Beschreibung zu Figur 4 erläutert.

### Schaltzustand 3

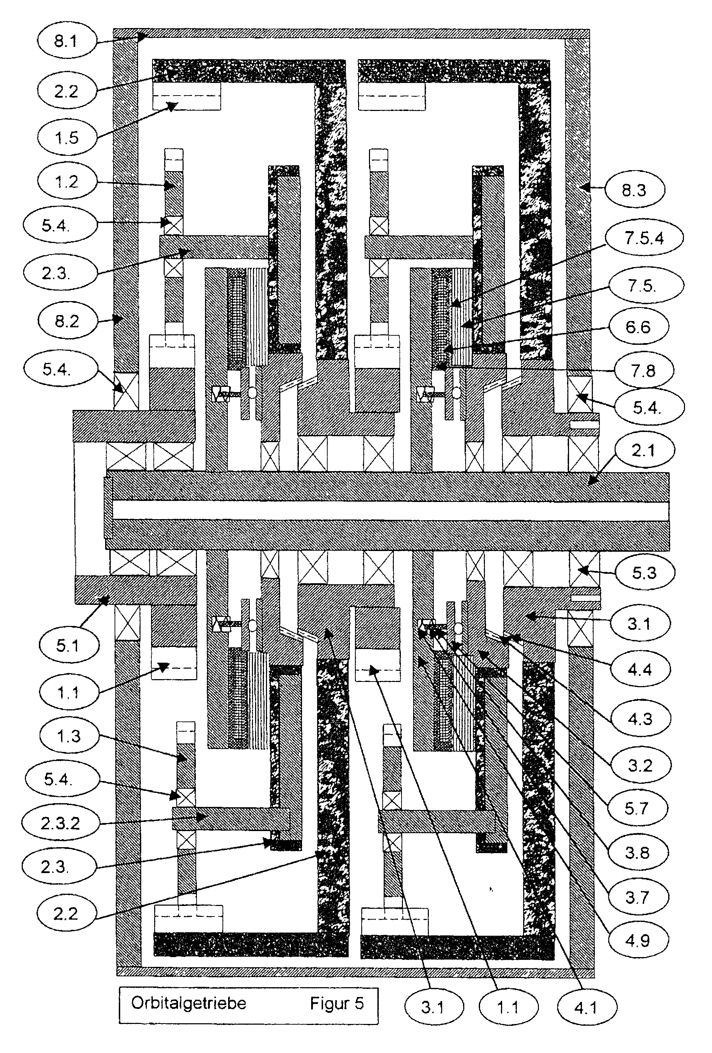

Die Funktionsweise in diesem Fall ist sinngemäß die gleiche wie in der Beschreibung zu Figur 5 erläutert.

### Schaltzustand 4

Ausgehend von der in Schaltzustand 1 beschriebenen Wirkung (Halteringspule **6.6** und Orbitalspule **6.3** stromlos) werden die Orbitalspule **6.3** und die Halteringspule **6.6** durch eine entsprechende Beschaltung außerhalb des Getriebes gleichzeitig eingeschaltet. Da die Kräfte von den nun entstehenden zwei gleich starken Magnetfeldern entgegengesetzt wirken, erfolgt keine axiale Verschiebung. Die Kegelradverzahnung **4.3.1** und **4.3.2** der Planetenradträgernabe **3.2** bleibt weiterhin aus der Kegelradgegenverzahnung **4.4.2** der Orbitalradträgemabe **3.1** und aus der Kegelradgegenverzahnung **4.4.1** der Halteringnabe **4.2** ausgerückt und kann auf seinem Lager **5.6** drehen. Durch die Drehbewegung des Planetenradträgers **2.3.1** in dem Magnetfeld der Orbitalspule **6.3** und der Halteringspule **6.6** werden in dem elektrisch und magnetisch leitfähigen Planetenradträger **2.3.1** Wirbelströme erzeugt, deren Magneffelder den erzeugenden Magnetfeldern entgegengesetzt gerichtet sind. Die Drehzahl des Planetenradträgers **2.3.1** nimmt proportional zur Stärke der erzeugenden Magneffelder ab. Die Stärke der Magneffelder ist proportional zum elektrischen Strom in der Orbitalspule **6.3** und der Halteringspule **6.6** . Die Drehzahl des Planetenradträgers **2.3.1** ist somit über den Strom der Orbitalspule **6.3** und der Halteringspule **6.6** regelbar. Es kann eine Drehzahl des Planetenradträgers **2.3.1** eingestellt werden, die oberhalb der 0-Drehzahl (Stillstand) des Schaltzustandes 3 und unterhalb der Drehzahl des Schaltzustandes 1 liegt. Entsprechend proportional zur Drehzahl des Planetenträgers ist die Drehzahl des abtreibenden Orbitalrades.

### Beschreibung zu Figur (7)

Die Antriebswelle **5.1** ist auf der Zentralachse **2.1** mit einem Hauptlager **5.3** verlagert. Das antriebseitige Lagerschild **8.2** stützt sich über das Wälzlager **5.4.1** auf der Antriebswelle **5.1** ab. Mit dem Lagerschild **8.2** fest verbunden ist die Drehmomentstützplatte **4.8**, die zum Anschluß an äußere Tragkonstruktionen dient. An der Stimseite der Antriebswelle **5.1** ist der Antriebswellenkragen **3.6** befestigt. An dem Kragen **3.6** sind, auf einem Teilkreis angeordnet, Bohrungen mit Wälzlagern **5.4.4**. In den Wälzlagern **5.4.4** sind Planetenradwellen **5.9** verlagert, auf denen das Grundplanetenrad **1.2.1** und das Tandemplanetenrad **1.4** befestigt sind.
Das außenverzahnte Vollrad **1.6** ist am Vollradankerplattenträger **2.6** befestigt, der auf der Antriebswelle **5.1** mit einem für Axialverschiebung geeigneten Lager **5.4.5** verlagert ist. Das innenverzahnte Hohlrad **1.7** ist an dem Hohlradankerplattenträger **2.7**, der auf der Gehäuseschulter **8.5** mit einem für Axialverschiebung geeigneten Lager **5.4.6** verlagert ist, befestigt. An dem Hohlradankerplattenträger **2.7** ist die ringförmige Hohlradankerplatte **4.5** befestigt. Ebenso ist an dem Vollradankerplattenträger **2.6** die ringförmige Vollradankerplatte **4.5** befestigt. Die Vollradankerplatte **4.5** befindet sich in einem geringen Abstand (ca. 0,5mm) gegenüber dem Elektroblech **7.5.4** der Vollradankerspule **6.1** und die Hohlradankerplatte **4.6** befindet sich in einem geringen Abstand (ca. 0,5mm) gegenüber dem Elektroblech **7.5.5** der Hohlradankerspule **6.4** . Zwischen der Vollradankerplatte **4.5** und der Antriebswelle **5.1** , der Vollradankerplatte **4.5** und der Gehäuseschulter **8.5**, dem antriebseitigen Lagerschild **8.2** und der Hohlradankerplatte **4.6** befinden sich Wellendichtringe **5.8** . Dadurch ist der Ankerplattenschaltraum gegen das Schmiermittel im übrigen Getrieberaum abgeschlossen. Das Sonnenrad **1.1.1** ist auf dem Sonnendurchtriebplattenträger **2.9**, der auf der Zentralachse **2.1** mit einem Hauptlager **5.3** verlagert ist, befestigt. Das Orbitalrad **1.5** ist mit dem Orbitaldurchtriebplattenträger **2.8** verbunden. Der Orbitaldurchtriebplattenträger **2.8** ist auf dem Sonnendurchtriebplattenträger **2.9** mit einem für Axialverschiebung geeigneten Lager **5.4.7** verlagert. An dem Orbitaldurchtriebplattenträger **2.8** ist die ringförmige Orbitaldurchtriebplatte **3.4** befestigt. Ebenso ist an dem Sonnendurchtriebplattenträger **2.9** die ringförmige Sonnendurchtriebplatte **3.5** befestigt. Die Sonnendurchtriebplatte **3.5** befindet sich in einem geringen Abstand (ca. 0,5mm) gegenüber dem Elektroblechpaket **7.5.6** der Sonnenringspule **6.2** . Die Orbitaldurchtriebplatte **3.4** befindet sich in einem geringen Abstand (ca. 0,5mm) gegenüber dem Elektroblechpaket **7.5.7** der Orbitalringspule **6.3** Das Grundplanetenrad **1.2.1** greift gleichzeitig in das außenverzahnte Vollrad **1.6** und in das innenverzahnte Hohlrad **1.7** . Das Tandemplanetenrad **1.4** befindet sich mit dem Grundplanetenrad **1.2.1** auf einer gemeinsamen Welle **5.9** . Beide Planetenräder sind mit der Welle fest verbunden. Das Tandemplanetenrad **1.4** greift gleichzeitig in das außenverzahnte Sonnenrad **1.1.1** und das innenverzahnte Orbitalrad **1.5**, Die Sonnenringspule **6.2** und die Orbitalringspule **6.5** ist mittels einer Isoliermasse in dem Ringspulenträger **2.5** eingelassen. Der Ringspulenträger **2.5** besteht zum Teil aus magnetisch schlecht leitendem Material (z.B. austenitischer Stahl) zur Vermeidung magnetischer Kurzschlüße zwischen dem Elektroblechpaket **7.5.6** der Sonnenringspule **6.2** und dem Elektroblechpaket **7.5.7** der Orbitalringspule **6.5** . Zwischen dem Ringspulenträger **2.5** und der Orbitaldurchtriebplatte **3.4** einerseits und der Sonnendurchtriebplatte **3.5** andererseits sind Wellendichtringe **5.8** . Dadurch ist der Durchtriebplattenschaltraum gegen das Schmiermittel im übrigen Getrieberaum abgeschlossen
Der Ringspulenträger **2.5** ist mit einem Hauptlager **5.3** auf der Zentralachse **2.1** verlagert. Auf dem Zapfen des Ringspulenträgers **2.5** ist ein Sonnenrad **1.1.2** befestigt, das in Zahneingriff mit dem Grundplanetenrad **1.2.2** der folgenden Getriebestufe ist. Auf dem Ringspulenträger **2.5** befindet sich die, in Figur (6) bereits beschriebene, Stromzuführung zu der Sonnenringspule **6.2** und der Orbitalringspule **6.5** . Die Stromzuführung zu der Hohlradankerspule **6.4** und der Vollradankerspule **6.1** erfolgt über ortsfest verlegte Leitungen.
Die folgenden Schaltzustände der Spulen sind möglich und demzufolge werden die jeweiligen, den Spulen gegenüberliegenden, Platten durch Magnetkraft angezogen und mit den jeweiligen Elektroblechen kraftschlüssig verbunden. Dabei verschieben sich Vollrad, Hohlrad, Sonnenrad oder Orbitalrad um den Betrag des Luftspaltes zwischen Platte und Elektroblech innerhalb des Zahneingriffes axial.

| Schaltzustand 1: | | |
|---|---|---|
| Vollradankerspule **6.1** | aus | Antriebswelle **5.1** freilaufend |
| Hohlradankerspule **6.4** | aus | |
| Sonnenringspule **6.2** | aus | Abtriebswelle **5.2** freilaufend |
| Orbitalringspule **6.5** | aus | |

| Schaltzustand 2: | | |
|---|---|---|
| Vollradankerspule **6.1** | ein | Antriebswelle **5.1** gebremst |
| Hohlradankerspule **6.4** | ein | |
| Sonnenringspule **6.2** | aus | Abtriebswelle **5.2** freilaufend |
| Orbitalringspule **6.5** | aus | |

| Schaltzustand 3: | | |
|---|---|---|
| Vollradankerspule **6.1** | aus | direkter Durchtrieb |
| Hohlradankerspule **6.4** | aus | ohne Richtungswahl und ohne Grundplanetenrad **1.2** / Tandemplanetenrad **1.4** - Übersetzung |
| Sonnenringspule **6.2** | ein | Abtriebswelle **5.2** |
| | | richtungsabhängig von |
| Orbitalringspule **6.5** | ein | Antriebswelle **5.1** |

| Schaltzustand 4: | | |
|---|---|---|
| | | Antriebswelle **5.1** rechtsdrehend |
| Vollradankerspule **6.1** | aus | Vollrad **1.6** Freilauf |
| Hohlradankerspule **6.4** | ein | Hohlrad **1.7** Stillstand |
| | | Grundplanetenrad **1.2.1** linksdrehend |
| | | Tandemplanetenrad **1.4** linksdrehend |
| | | Sonnenrad **1.1.1** rechtsdrehend |
| Sonnenringspule **6.2** | ein | Ringspulenträger **2.5** rechtsdrehend |
| Orbitalringspule **6.4** | aus | Orbitalrad **1.5** links Freilauf |
| | | Sonnenrad **1.1.2** rechtsdrehend |

| Schaltzustand 5: | | |
|---|---|---|
| | | Antriebswelle **5.1** rechtsdrehend |
| Vollradankerspule **6.1** | ein | Vollrad **1.6** Stillstand |
| Hohlradankerspule **6.4** | aus | Hohlrad **1.7** rechts Freilauf |
| | | Grundplanetenrad **1.2.1** rechtsdrehend |
| | | Tandemplanetenrad **1.4** rechtsdrehend |
| | | Orbitalrad **1.5** rechtsdrehend |
| Sonnenringspule **6.2** | aus | Sonnenrad **1.1.1** links Freilauf |
| Orbitalringspule **6.4** | ein | Ringspulenträger **2.5** rechtsdrehend |
| | | Sonnenrad **1.1.2** rechtsdrehend |
| | | mit i(5) > i(4) |

| Schaltzustand 6: | | |
|---|---|---|
| | | Antriebswelle **5.1** rechtsdrehend |
| Vollradankerspule **6.1** | ein | Vollrad **1.6** Stillstand |
| Hohlradankerspule **6.4** | aus | Hohlrad **1.7** rechts Freilauf |
| | | Grundplanetenrad **1.2.1** rechtsdrehend |
| | | Tandemplanetenrad **1.4** rechtsdrehend |
| | | Sonnenrad **1.1.1** linksdrehend |
| Sonnenringspule **6.2** | ein | Ringspulenträger **2.5** linksdrehend |
| Orbitalringspule **6.4** | aus | Orbitalrad **1.5** rechts Freilauf |
| | | Sonnenrad **1.1.2** linksdrehend |

| Schaltzustand 7: | | |
|---|---|---|
| | | Antriebswelle **5.1** rechtsdrehend |
| Vollradankerspule **6.1** | aus | Vollrad **1.6** links Freilauf |
| Hohlradankerspule **6.4** | ein | Hohlrad **1.7** Stillstand |
| | | Grundplanetenrad **1.2.1** linksdrehend |
| | | Tandemplanetenrad **1.4** linksdrehend |
| | | Orbitalrad **1.5** linksdrehend |
| Sonnenringspule **6.2** | aus | Sonnenrad **1.1.1** rechts Freilauf |
| Orbitalringspule **6.4** | ein | Ringspulenträger **2.5** linksdrehend |
| | | Sonnenrad **1.1.2** linksdrehend |
| | | mit i(7) > i(6) |

| Schaltzustand 8: | | |
|---|---|---|
| Vollradankerspule **6.1** | ein | Antriebswelle **5.1** gebremst |
| Hohlradankerspule **6.4** | ein | |
| Sonnenringspule **6.2** | ein | Abtriebswelle **5.2** gebremst |
| Orbitalringspule **6.5** | ein | |

### Beschreibung zu Figur (8)

Bei Getrieben nach Figur (8), die für Leistungsverzweigung oder dezentralen Antrieb genutzt werden, ist das Grundplanetenrad **1.2.1** auf der Antriebswelle **5.1.1** bzw. sind die Grundplanetenräder auf mehreren Antriebswellen befestigt, die im antriebseitigen Lagerschild **8.2** mit Wälzlager **5.4.1** verlagert sind. Die Ankerplatten und die dazugehörigen Teile der Figur (7) entfallen.
Auf der Zentralachse **2.1** ist der Sonnendurchtriebplattenträger **2.9** mit einem für axiale Verschiebung geeignetem Lager **5.4.3** verlagert. Das Sonnenrad **1.1.1** ist auf und die Sonnendurchtriebplatte **3.5** ist an dem Sonnendurchtriebplattenträger **2.9** befestigt. Auf der Gehäuseschulter **8.5** ist der Orbitaldurchtriebplattenträger **2.8** mit einem für axiale Verschiebung geeignetem Lager **5.4.4** verlagert. Das Orbitalrad **1.5** ist in und die Orbitaldurchtriebplatte **3.4** ist an dem Sonnendurchtriebplattenträger **2.8** befestigt. Die Sonnendurchtriebplatte **3.5** befindet sich in einem geringen Abstand (ca. 0,5mm) gegenüber dem Elektroblechpaket **7.5.6** der Sonnenringspule **6.2** . Die Orbitaldurchtriebplatte **3.4** befindet sich in einem geringen Abstand (ca. 0,5mm) gegenüber dem Elektroblechpaket **7.5.7** der Orbitalringspule **6.3**.

Das Grundplanetenrad **1.2.1** greift gleichzeitig in das außenverzahnte Sonnenrad **1.1.1** und das innenverzahnte Orbitalrad **1.5** .
Die Sonnenringspule **6.2** und die Orbitalringspule **6.5** ist mittels einer Isoliermasse **7.8** in dem Ringspulenträger **2.5** eingelassen. Der Ringspulenträger **2.5** besteht zum Teil aus magnetisch schlecht leitendem Material (z. B. austenitischer Stahl) zur Vermeidung magnetischer Kurzschlüße zwischen dem Elektroblechpaket **7.5.6** der Sonnenringspule **6.2** und dem Elektroblechpaket **7.5.7** der Orbitalringspule **6.5** . Zwischen dem Ringspulenträger **2.5** und der Orbitaldurchtriebplatte **3.4** einerseits und der Sonnendurchtriebplatte **3.5** andererseits sind Wellendichtringe **5.8** . Dadurch ist der Durchtriebplattenschaltraum gegen das Schmiermittel im übrigen Getrieberaum abgeschlossen
Der Ringspulenträger **2.5** ist mit einem Lager **5.4.3** auf der Zentralachse **2.1** verlagert. Auf dem Zapfen des Ringspulenträgers **2.5** ist ein Sonnenrad **1.1.2** befestigt, das in Zahneingriff mit dem Grundplanetenrad **1.2.2** der folgenden Getriebestufe ist. Auf dem Ringspulenträger **2.5** befindet sich die, in Figur (6) bereits beschriebene, Stromzuführung zu der Sonnenringspule **6.2** und der Orbitalringspule **6.5** . Die folgenden Schaltzustände der Sonnenringspule **6.2** und der Orbitalringspule **6.5** sind möglich, die allgemeine Funktionsweise ist in Figur (6) beschrieben.

| Schaltzustand 1: | | |
|---|---|---|
| Sonnenringspule **6.2** | aus | Abtriebswelle freilaufend |
| Orbitalringspule **6.5** | aus | |

| Schaltzustand 2: | | |
|---|---|---|
| | | Grundplanetenrad **1.2.1** rechtsdrehend |
| | | Sonnenrad **1.1.1** linksdrehend |
| | | Orbitalrad **1.5** rechtsdrehend |
| Sonnenringspule **6.2** | ein | Sonnenrad **1.1.2** linksdrehend |
| Orbitalringspule **6.5** | aus | Orbitalrad **1.5** freilaufend |
| | | Grundplanetenrad **1.2.2** rechtsdrehend |

| Schaltzustand 3: | | |
|---|---|---|
| | | Grundplanetenrad **1.2.1** rechtsdrehend |
| | | Sonnenrad **1.1.1** linksdrehend |
| | | Orbitalrad **1.5** rechtsdrehend |
| Sonnenringspule **6.2** | aus | Sonnenrad **1.1.1** freilaufend |
| Orbitalringspule **6.5** | ein | Sonnenrad **1.1.2** rechtsdrehend |
| | | Grundplanetenrad **1.2.2** linksdrehend |

| Schaltzustand 4: | | |
|---|---|---|
| Sonnenringspule **6.2** | ein | Antriebswelle **5.1.1, 5.1.2** |
| Orbitalringspule **6.5** | ein | und Abtriebswelle **5.2** gebremst |

Grundsätzlich wird das Reaktionsmoment des Grundplanetenrades **1.2.3** über die Planetenradachse **2.3.2**, den Planetenradträger **2.3.1** und der Planetenradträgernabe **3.2** auf die Zentralachse **2.1** übertragen.
Figur (8.2) zeigt die Erfassung des Reaktionsmomentes durch Druckmeßstreifen. Die Planetenradträgernabe **3.2** wird mittels Gleitlager **5.6** auf der Zentralachse **2.1** verlagert und durch den Drehmomentstützring **4.7** und der Drehmomentstützplatte **4.8** gegen "Durchdrehen" gehalten. Zwischen der Nut des Drehmomentstützringes **4.7** und der Feder der Drehmomentstützplatte **4.8** liegen die Druckmeßstreifen **7.9**. Richtung und Größe des Reaktionsmomentes können aufgrund der Meßwerte der Druckmeßstreifen ermittelt werden.

### Beschreibung zu Figur (9)

Figur (9) zeigt eine von mehreren möglichen Ausführungsformen eines Getriebes zur Leistungsverzweigung. Ausgangspunkt der Beschreibung ist ein Getriebe, wie es bei Figur (8) beschrieben ist.
An der Antriebsseite entfallen die Hauptantriebswellen **5.1.2** (bis 5.1.n) der Figur (8.1). Die Drehbewegung der Hauptantriebswelle **5.1.1** wird über das Kegelrad **1.8.4** unabhängig vom Schaltzustand der Sonnenringspule und Orbitalringspule zum antriebseitigen Lagerschild **8.2** hin zurückgeführt. Dabei wird die Drehzahl der Welle **5.9.4** über das Verhältnis Tellerrad **1.9.1** zu Kegelrad **1.8.4** auf die Welle **5.9.3** übersetzt. Die Welle **5.9.3** ist in den Wälzlagern **5.4.3** und **5.4.6** verlagert. Über das Kegelradpaar **1.8.1** / **1.8.2** ist die Welle **5.9.3** mit der Welle **5.9.1** verbunden, über das Kegelrad **1.8.3** / Tellerrad **1.9.2** ist die Welle **5.9.2** mit der Welle **5.9.1** verbunden. Die Wellen können, wie in Figur (9) dargestellt, für verschiedene Anwendungen genutzt werden.
An der Orbitalradträgernabe **3.1** ist ein Kegelrad **1.9.3** befestigt. Darüber werden die Kegelräder **1.8.5** und **1.8.6** angetrieben, die auf den Abtriebswellen **5.2.1** und **5.2.2** befestigt und über Wälzlager **5.4.8** und **5.4.9** aus dem Gehäuse **8.1** herausgeführt sind. Das abtriebseitige Schild **8.3** ist als Lochflansch zu Befestigung des Getriebes an eine Tragkonstruktion ausgebildet. Die Zentralachse **2.1** ist an dem Schild **8.3** befestigt.

### Beschreibung zu Figur (10)

### Allgemein

Figur (10) zeigt ein Schaltgetriebe mit Leistungsverzweigung, integriertem Kegelradausgleichsgetriebe mit Differentialsperre und 3. Hauptabtriebswelle. Aufgrund der Bewertung der Betriebszustände "Vorwärtsgang", "Freilaufstellung", "Rückwärtsgang" wurde eine Anordnung mit permanenten ,,Vorwärtsgang", geschalteter "Freilaufstellung" und geschaltetem ,,Rückwärtsgang" gewählt. Andere Anordnungen sind anwendungsspezifisch ebenfalls möglich. Durch den permanent eingerückten "Vorwärtsgang" ist bei Schubbetrieb in Gefällestrecken die mechanische Koppelung der Fahrzeugräder mit der Motorbremse gewährleistet. Zur Erhöhung der Schaltsicherheit dient ein zweites System, das unabhängig von der elektromagnetischen Kupplung die "Freilaufstellung" oder den "Rückwärtsgang" schalten kann.
Ausgangspunkt der Beschreibung ist ein Getriebe, wie es zu Figur (9) und Figur (4) beschrieben ist.

### Aufbau Getriebeeingang

Auf der Antriebswelle **5.1** ist der Rotor **7.10** einer Wirbelstrombremse befestigt, der im Magnetfeld der Statorspule **6.13** läuft. Durch den Stromfluß in der Statorspule **6.13** kann über das Grundplanetenrad **1.2.1** die Drehzahl des Sonnenrades **1.1.1** und des Orbitalrades **1.5** beeinflußt werden. Die Regelung wirkt unabhängig davon, welche der jeweiligen Wellen der Leistungsverzweigung motorisch treibt bzw. generatorisch getrieben werden.
Der Schaltraum der Eingangsstufe ist durch Wellendichtringe **5.8** gegen Schmiermittel im Getriebegehäuse abgeschlossen.
Im Schaltraum ist die Kupplungsplatte **3.9** mit dem Orbitalreibbelag **3.10** und dem Sonnenreibbelag **3.11** . In einen Lochkreis der Kupplungsplatte fest eingelassen sind Mitnehmerstifte **3.17**, die in Gleitlagern **5.6.1** des Mitnehmerkragens **3.18** verlagert sind. Von der Kupplungsplatte **5.9** aus gesehen, sind die Schaltelemente in folgender Reihenfolge angeordnet: Elektroblechplatte **7.5.1**, Freilaufspule **6.10**, Druckfeder **3.7.1**, Mitnehmerkragen **3.18**, Elektroblechplatte **7.5.2**, Reversierspule **6.11** .

Der Mitnehmerkragen **3.18** ist mit Kegelrollenlagern **5.10** auf der innenverzahnten Schiebhülse **4.10.1** verlagert. Die Schiebehülse **4.10.1** wird durch die Vielfachverzahnung **4.9.1** der Zentralachse **2.1** gegen Drehbewegung gehalten. Vor der Schiebhülse **4.10.1** befindet sich ein Druckring **3.15**, der durch drei Langlöcher in der (hohlgebohrten bzw. Rohr-) Zentralachse **2.1** geführt und in seinem Mittelpunkt an eine Kolbenstange **3.14** befestigt ist.

Die Kolbenstange **3.14** wird durch einen Druckzylinder **3.13** mit drei Stellungen betätigt.

Zwischen der Stromversorgung der Freilaufspule **6.10** und der Reversierspule **6.11** und dem Mitnehmerkragen **3.18** ist ein verzahntes Gleitlager **5.6.2** angeordnet, daß die Stromversorgung durch den Mitnehmerkragen **3.18** drehend mitnimmt, jedoch eine Axialverschiebung des Mitnehmerkragens **3.18** ohne Axialverschiebung der Stromversorgung zuläßt.

### Funktion Getriebeeingang

Durch die Antriebswelle **5.1** wird das Grundplanetenrad **1.2.1** in eine rechtsdrehende Bewegung versetzt. Dadurch dreht sich das Orbitalrad **1.5** rechts und das Sonnenrad **1.1.1** links. Das Sonnenrad treibt die Abtriebswellen der Leistungsverzweigung, ist jedoch, - auf die weiteren Getriebestufen bezogen -, freilaufend. Durch die Druckfeder **3.7.1** wird der Orbitalreibbelag **3.10** gegen das Orbitalrad **5.1** gedrückt. Die Kupplungsscheibe **3.9** wird rechtsdrehend mitgenommen und treibt über die Mitnehmerstifte **3.17** den Mitnehmerkragen **3.18** und das Sonnenrad **1.1.2** rechtsdrehend an. Bei Stromfluß in der Freilaufspule **6.10** wird die Platte **7.5.1** angezogen und verschiebt die Mitnehmerstifte **3.17** gegen den Federdruck axial in Richtung Mitnehmerkragen **3.18** . Dadurch wird der Orbitalreibbelag **3.10** vom Orbitalrad **1.5** gelöst und das Sonnenrad **1.1.2** läuft frei. Wird in dieser Zwischenstellung der Mitenhmerstifte **3.17** die Reversierspule **6.11** eingeschaltet. so wird die Platte **7.5.2** angezogen, die Mitnehmerstifte **3.17** verschieben sich axial gegen den Federdruck. Dadurch wird der Sonnenreibbelag gegen das linksdrehende Sonnenrad gedrückt und der Mitnehmerkragen **3.18** wird durch die Mitnehmerstifte **3.17** linksdrehend mitgenommen. Dadurch dreht das Sonnenrad **1.1.2** links.

Wird der Strom der Freilaufspule **6.10** und der Reversierspule **6.11** ausgeschaltet, so drückt die Feder **3.7.1** den Orbitalreibbelag **3.10** gegen das Orbitalrad **1.5** .

### Funktion des zweiten Systems

Wird über den Druckzylinder **3.13** die Kolbenstange **3.14** in die erste Stellung geschoben, drückt der Druckring **3.15** gegen die Schiebehülse **4.10.1** . Dadurch wird, über das Kegelrollenlager **5.10**, daß für axiale Kräfte geeignet ist, der Mitnehmerkragen **3.18** verschoben und die Druckfeder **3.7.1** enspannt. Der Orbitalreibbelag **3.10** wird schlupfend vom Orbitalrad **1.5** mitgenommen. Durch weitere axiale Verschiebung der Kolbenstange **3.14** wird über den Mitnehmerkragen **3.18** die Platte **7.5.2** und darüber die Mitnehmerstifte **3.17** axial verschoben, der Orbitalreibbelag **3.10** löst sich vom Orbitalrad **1.5**, der Sonnenreibbelag **3.11** wird gegen das Sonnenrad **1.1.1** gedrückt, der Mitnehmerkragen **3.18** und das Sonnenrad **1.1.2** dreht links.

### Aufbau Getriebeausgang

Auf der Hauptabtriebswelle **5.2.0** im Getriebegehäuse ist das Kegelrad **1.8.1** befestigt. Das abtnebseitige Ende der Zentralachse **2.1** wird durch einen Ring gebildet, in dem das Kegelrad-Ausgleichgetriebe **3.12** verlagert ist. An dem Gehäuse des Kegelradausgleichgetriebes **3.12** ist das Tellerrad **1.9** befestigt, das in das Kegelrad **1.8.1** eingreift. Aus dem Differentialgetriebegehäuse **3.12** heraus sind die Abtriebswellen **5.2.1** und **5.2.2** durch das Getriebegehäuse **8.1** nach außen geführt.

Auf der Abtriebswelle **5.2.1** befindet sich eine Vielfachverzahnung **4.9.2** mit einer axial verschiebbaren Schiebehülse **4.10.2**, an der die Sperrspule **6.12** befestigt ist. Zwischen dem Druckkragen **3.16** und der Sperrspule ist eine Druckfeder **3.7.2** . An dem Tellerrad **1.9** ist ein Elektroblechpaket **7.5.3** befestigt. Die Abtriebswelle **5.2.3** ist auf dem Umkreis zum Kegelrad **1.8.1** an der Antriebswelle **5.2.2** vorbeigeführt und im abtriebseitigen Lagerschild **8.3** verlagert.

### Funktion Getriebeausgang

Das Kegelrad **1.8.1** treibt das Tellerrad **1.9** und damit das Kegelradausgleichgetriebe **3.12** und die Abtriebswellen **5.2.1** und **5.2.2** . Wird die Sperrspule **6.12** eingeschaltet, entsteht zwischen dem Elektroblechpaket **7.5.3** und der Sperrspule **6.12** eine kraftschlüssige Verbindung. Dadurch wird die Abtriebswelle **5.2.1** über die Vielfachverzahnung **4.9.2** und der Schiebhülse **4.10.2** mit dem Tellerrad **1.9** verblockt. Das Differentialgetriebe **3.12** ist gesperrt. Wird die Sperrspule **6.12** ausgeschaltet, so hebt die Druckfeder **3.7.2** die Differentialsperre auf.

### Systematik der Orbitalgetriebe

Die Ausführungsvarianten des Orbitalgetriebes sind untergliedert nach Baugröße, Bauform, Bauart,
Übersetzungsverhältnisbereich, Synchrondrehzahlbereich-50Hz-Maschine in einer Rechtecksäule angeordnet und mit Schlüsselnummern versehen.

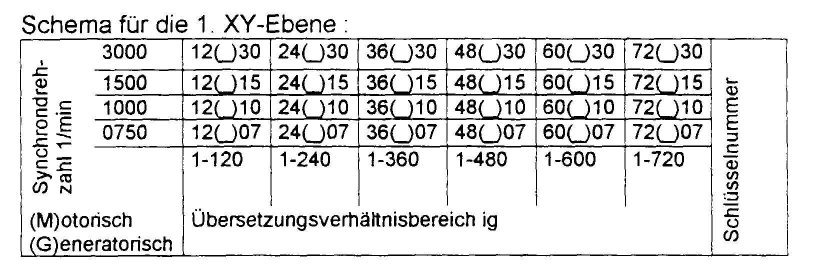

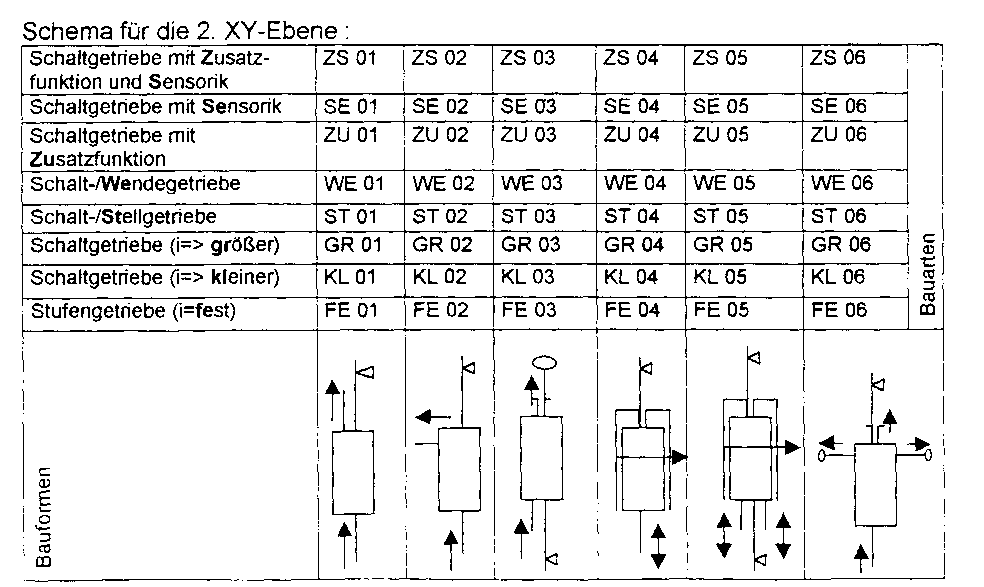

### Schema der Z - Koordinate:

Nach DIN 42672 und DIN 42673 sind die Baugrößen von Drehstromnormmotoren mit Käfigläufer, Bauform IM B3, definiert über das Maß h (Mitte Abtriebswelle / Unterkante Motorfuß) und über die Länge des Rotors (**S**hort, **M**iddle, **L**ong).
Die Baugrößen des Orbitalgetriebes werden dazu kongruent definiert.

Untergliederungen bei Motoren unterhalb Baugröße 90 bleiben unberücksichtigt. Somit sind die 24 maßgeblichen Baugrößen des Typenschlüssels des Orbitalgetriebes:

| | |
|---|---|
| (1) 56, 63, 71, 80, 90S, 90L, | (ca. 0,09 - 2,2 kW) |
| (2) 100L, 112M, 132S, 132M, | (ca. 0,75 - 7,5 kW) |
| (3) 160M, 160L, 180M, 180L, | (ca. 4,0 - 18,5 kW) |
| (4) 200M, 200L, 225S, 225M, | (ca. 15,0 - 45,0 kW) |
| (5) 250S, 250M, 280S, 280M, | (ca. 30,0 - 90,0 kW) |
| (6) 315S, 315M. | (ca. 55,0 - 160,0 kW) |

### Beispiele

1) Schaltgetriebe mit folgender Charakteristik:
   h-Maß 280 mm
   Drehfrequenz 750 1/min (Eingangsdrehzahl bei motorischen Betrieb ca. 720 1/min)
   Übersetzungsbereich von ig = 1 bis 360
   kleiner werdendes ig durch den Schaltvorgang
   Antrieb zentral
   Achsfestpunkt abtriebseitig
   Abtrieb als Trommel über das Getriebe zurückgeführt
   hat den Typenschlüssel : 112-36M07-KL04
2) Schaltgetriebe mit folgender Charakteristik:
   h-Maß mm
   Drehfrequenz 3000 1/min (Ausgangssynchrondrehzahl bei generatorischem Betrieb)
   Übersetzungsbereich von ig = 1 bis 720
   größer werdendes ig durch den Schaltvorgang
   Antrieb als Trommel über das Getriebe geführt
   Achsfestpunkt antriebseitig
   Abtrieb exzentrische Leistungsverzweigung
   hat den Typenschlüssel : 280-72G30-GR05
3) Schaltgetriebe mit folgender Charakteristik:
   h-Maß 315 mm
   Drehfrequenz 1500 1/min (Eingangsdrehzahl bei dieselmotorischem Betrieb)
   Übersetzungsbereich von ig = 1 bis 120
   Schaltgetriebe mit Sensorik (Drehmoment- und Drehzahlerfassung)
   und Zusatzfunktionenen (Drehrichtungswechsel, Freilauf)
   Antrieb zentrisch
   Achsfestpunkt am abtriebseitigen Flansch
   Abtrieb seitlich nach beiden Seiten
   hat den Typenschlüssel : 315-12M15-ZS06

### Vorteile der Erfindung

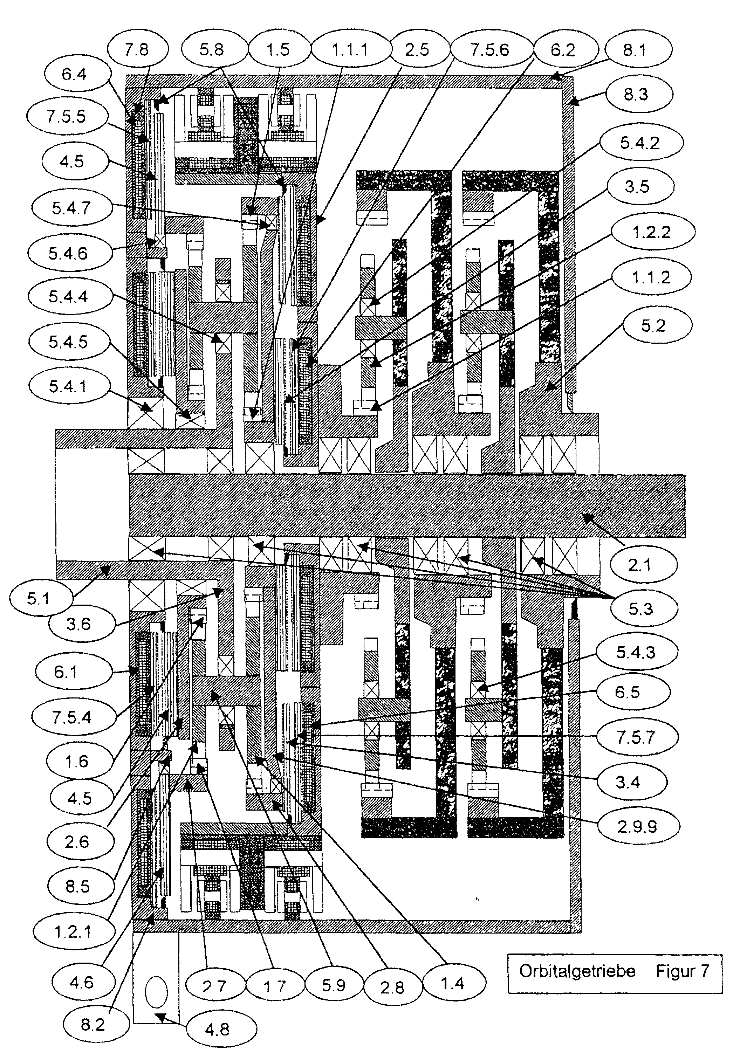

- Die Schwierigkeiten der Wellenverlagerung, die bei mehrstufigen Planetenschaltgetrieben koaxialer Bauart gegeben sind werden durch die zentrale Achse beseitigt.
   Die Betätigung zur Schaltung der Getriebegänge erfolgt bei Fahrzeuggetrieben durch komplexe hydraulische Steuerungen ( DE C2 4132873 )(DE A1 3801362 ). Zur Schaltung ist eine Kombination von (Band-)Bremsen zur Arretierung der umlaufenden Hohlräder und (Lamellenreib-)Kupplungen erforderlich. Das Orbitalgetriebe nach Anspruch ist als Schaltgetriebe gekennzeichnet durch eine optimalere Art der Beschaltung und der Verlagerung gegenüber herkömmlichen Schaltgetrieben.
- Das Orbitalgetriebe nach Anspruch ist durch einen einfachen modularen Aufbau gekennzeichnet.
   Auf einer Achse aus handelsüblichen Rundmaterial oder Rohr können standardisierte Getriebeabstufungen aneinandergereiht und so optimale anwendungsspezifische Übersetzungen verwirklicht werden.
   Durch das grundsätzliche Prinzip, die rotierenden Zahnräder auf einer Achse zu verlagem, kann das Orbitalgetriebe mit relativ einfachen geometrischen Formen konstruiert werden, so daß bei der Ausführung eine flache Fertigungstiefe möglich ist.
   Die Bauteile einer Stufe können auf einer gemeinsamen Hülse montiert, justiert und kontrolliert werden. Dadurch ist es möglich, die Fertigung zu einem Getriebe parallel ablaufen zu lassen. In der Endmontage werden die Trägerhülsen der einzelnen Stufen dann auf die im Stickstoffbad abgekühlte Achse geschoben (Kaltschrumpfverfahren). Die "automatische" Justage der einzelnen Stufen untereinander kann durch entsprechende konstruktive Ausbildung der Trägerhülsen erfolgen.
   Die axialen Gehäuseteile haben überwiegend lediglich eine Hüllfunktion, so daß auch sie aus handelsüblichem Rohr gefertigt werden können.
   Es lassen sich anwendungsspezifische Einzelgetriebe mit Teilen einer Serienfertigung kostengünstig herstellen.
- Die zentrale Achse des Getriebes kann, bei entsprechender Dimensionierung, als Trägerachse für z. B. Trommel- oder Radantriebe genutzt werden.
   Somit sind sehr kompakte und kostensparende Antriebsanordnungen möglich, da keine Maßnahmen gegen Achsversatz (z. B. Tonnenkupplung, Bogenzahnkupplung) zwischen Getriebe und Trommel bzw. Rad erforderlich sind.
- Aufgrund der zentralen Achse lassen sich, insbesondere bei Großgetrieben, unproblematisch andere Verlagerungstechniken als Wälzlagerungen anwenden. So läßt sich durch den Einsatz von Flüssigkeitsgleitlagern eine Körperschallentkoppelung zwischen den kämmenden Zahnrädern einerseits und dem Getriebegehäuse und dessen Tragwerk andererseits weitgehend ermöglichen.
- Das stirnseitige Lagerschild, bzw. das stirnseitige Schild mit dem Festpunkt der Zentralachse lassen sich konstruktiv einfach für Leistungsverzweigungen ausnutzen. So können dort an einem Orbitalgetriebe Verbrennungs-, Elektro-, Pneumatik-, Hydromotoren; Generatoren, Pumpen, Kompressoren angeschlossen werden. Kompakte Hybridantriebe mit Energierückgewinnung aus Bremsvorgängen sind somit relativ einfach möglich.
- Das Orbitalgetriebe kann sowohl in zahlreichen Funktionsarten als Über- oder Untersetzungsgetriebe mit festem Verhältnis, als Schaltgetriebe, als Drehzahl-Stellgetriebe, als kombiniertes Schalt- und Stellgetriebe, als Umkehrgetriebe als auch in zahlreichen Bauformen gebaut werden.
   Trotz der Variantenvielfalt ist ein Baukastensytem möglich, dessen Einteilung sich an die IEC-Normung von Elektromaschinen anlehnen läßt.
- Bei Schaltgetrieben ist es möglich, die Eingangsstufe zur Drehrichtungswahl bei entsprechender Beschaltung als Bremsstufe oder als Freilaufstufe zu nutzen.
- Bei Schaltgetrieben mit doppelten Planetenradsätzen ist die Drehrichtung des Orbitalrades gleich der Drehrichtung des Sonnenrades. Da im Getriebe keine internen Drehrichtungsänderungen stattfinden, kann der Durchtrieb einer Getriebestufe mit nur einem Schaltglied (Kupplung) erfolgen. Die bei herkömmlichen Schaltgetrieben erforderliche Kombination von zwei Schaltgliedern (Bremse und Kupplung) entfällt.
- Es lassen sich bei Fahrzeugantrieben Notbremsfunktionen ohne blockierende Räder realisieren.
- Bei gleichen Einbaudurchmessern des Orbitalgetriebes mit einem vergleichbaren Planetengetriebe kann mit dem Orbitalgetriebe ein größeres Übersetzungsverhältnis pro Stufe realisiert werden, da es sich aus dem Verhältnis von Sonnenrad zu Orbitalrad und nicht aus dem - zwangsläufig kleineren - Verhältnis von Sonnenrad zu Planetenrad ergibt.
- Bei mehrstufigen Schaltgetrieben kann, aufgrund der Vielfalt der möglichen Übersetzungskombinationen, der jeweilige Antriebsmotor im günstigsten Leistungsbereich betrieben werden, so daß sich Energiespareffekte ergeben.
   Zum Beispiel kann mit einem fünfstufigen Orbitalgetriebe mit den Einzelübersetzungen i₁=2, i₂=3, i₃=4, i₄=5, i₅=6
   eine Gesamtübersetzung i_{g}=720 bis i_{g}=1 in 32 theoretischen Abstufungen, bzw. 27 tatsächlichen Abstufungen geschaltet werden.
   Es ist also beispielsweise möglich, mit einem 4poligen Asynchronelektromotor mit 720 min⁻¹ Ausgangsdrehzahl, eine Getriebausgangsdrehzahl von 1min⁻¹bis 720min⁻¹ zu erzeugen.
   Wenn dieser Asynchronmotor zudem noch über Frequenzumrichterbetrieb drehzahlgeregelt ist, so lassen sich antriebstechnisch optimale Kombinationen von Drehzahl und Drehmoment realisieren: Die stufigen Ausgangsdrehzahlsprünge des Getriebes können über die Frequenzregelung verschliffen, gleichzeitig kann der Motor im günstigsten Drehmomentbereich betrieben werden.
- Bei kombinierten Schaltgetrieben z.B. als Kombination eines 5-stufigen Getriebes nach Figur (6) zusammen mit der Eingangsstufe eines Getriebes nach Figur (7) lassen sich die zuvor beschriebenen anwendungstechnischen Vorteile weiter optimieren. So ist es möglich, mit 14 Schaltelementen (5 Orbitalspulen, 5 Halteringspulen, 1 Vollradankerspule, 1 Hohlradankerspule, 1 Sonnenringspule und 1 Orbitalringspule) 243 Schaltzustände zu Drehrichtung und Übersetzung zu erzeugen. Diese Schaltzustände können mit Adresse 00 bis F3 über die CPU einer SPS-Steuerung verarbeitet werden.
   Bei diesen 243 Schaltzuständen bleibt der Schaltzustand 4 der Figur 7 unberücksichtigt, da dieser durch einen analogen Regelkreis beeinflußbar ist.
- Da die Elektromagnetkupplungen reaktionsschnell sind, lassen sich entsprechend gute Regelkreise bzw. Steuerungskreise aufbauen. Die Kupplungen können unmittelbar über Leistungsausgänge von Speicherprogrammierbaren Steuerungen (SPS) angesteuert werden oder im Nutzfahrzeug- bzw. Schlepperbetrieb manuell über handelsübliche Meisterschalter angesteuert werden.
- Das Wirkungsprinzip von magnetischer Koppelung und mechanischer Entkoppelung der einzelnen Getriebestufen läßt sich, unter weitgehender Beibehaltung der Einzelteile, umkehren. Somit können Schweranlauffunktionen ( Brecherwerke, Zentrifugen, Lüfter ) mit geringeren Motorleistungen als bei herkömmlichen Verfahren realisiert werden, da der Leistungsanteil für die Beschleunigung der drehenden Massen vermindert werden kann.
- Das Orbitalgetriebe ermöglicht die mittelbare Erfassung des Ausgangsdrehmomentes, woraus eine Optimierung der Antriebsregeltechnik resultieren kann. Diese Optimierung kann insbesondere bei Antriebssystemen genutzt werden, die Umwelteinflüssen ausgesetzt sind.
   So können bei Rad/Schiene- bzw. Rad/Straße-Systemen witterungsbedingt unterschiedliche Reibwerte auftreten, die zu Anfahrproblemen führen.
   Mit der Sensorik des Orbitalgetriebes lassen sich entsprechend abgestimmte Regelstrecken aufbauen, die das Anfahrverhalten positiv beeinflußen.
- Das Orbitalgetriebe kann die Sicherheitsansprüche der Fördertechnik erfüllen, da der Zahneingriff zwischen den Zahnradpaarungen nicht verlassen wird. Die Erhöhung der Abtriebsdrehzahl erfolgt über Elektromagnetkupplungen. Bei Störungen in diesem Bereich würden keine sicherheitsrelevanten Probleme auftreten, sondern lediglich eine Abtriebsdrehzahlverminderung erfolgen.
- Da die Schaltvorgänge im Getriebe nicht durch das Verschieben von Zahneingriffen hervorgerufen werden, sind bei Schaltstörungen keine Schäden an den Verzahnungsteilen zu erwarten.
- Komplizierte Nachjustagearbeiten, die bei zur Zeit üblichen komplexen Beschaltungen durch den natürlichen Teileverschleiß erforderlich sind, entfallen bei Orbitalgetrieben. Die Wartung wird wesentlich vereinfacht und entsprechend kostengünstiger.
- Die logischen Verküpfungen der Schaltfolgen können in einem Karnaugh-Veitch-(KV) Diagramm dargestellt, optimiert und unmittelbar in die Logik von Funktionsablauf-, Kontakt oder Stromlaufplänen integriert werden. Es ergibt sich eine durchlässige Schnittstelle zwischen Mechanik und Elektrotechnik (Stichwort: "Mechatronik").

## Patentansprüche

1. Getriebe zur Änderung der Drehzahl der abtreibenden Welle gegenüber der Drehzahl der antreibenden Welle, dadurch gekennzeichnet, daß die Verzahnungsteile sowie der erforderliche Zwischenträger, bestehend aus mindestens 1 Sonnenrad (1.1), mindestens 1 Planetenradträger(2.3.1) mit mindestens 1 Planetenradachse (2.3.2) mit mindestens 1 Grundplanetenrad (1.2) und mindestens 1 innenverzahntes Hohlrad (Orbitalrad 1.5), die diese Drehzahländerung bewirken, auf einer gemeinsamen, relativ zum Tragwerk feststehenden, vorwiegend zentralen, Achse (2.1) angeordnet sind.

2. Getriebe nach Anspruch (1), dadurch gekennzeichnet, daß auf mindestens 1 Planetenradträger (2.3.1) mindestens 2 Planetenräder (1.2/1.3) sich miteinander im Zahneingriff befinden.

3. Getriebe nach Anspruch (1), dadurch gekennzeichnet, daß mindestens 1 Orbitalrad (1.5) mit mindestens 1 Planetenradträger (2.3.1) gekuppelt werden kann, so daß der Planetenradträger mit der Drehzahl des Orbitalrades um die Achse (2.1) dreht, wobei die Entkuppelung von Planetenradträger und Orbitalrad über eine Kraft erfolgt, die der kuppelnden Kraft entgegenwirkt.

4. Getriebe nach Anspruch (1), dadurch gekennzeichnet, daß mindestens 1 Orbitalrad (1.5) von mindestens 1 Planetenträger (2.3.1) mit einer Kraft entkuppelt werden kann, so daß eine Änderung der Drehzahl zwischen mindestens 1 Sonnenrad (1.1) und mindestens 1 Orbitalrad (1.5) der nächsten Stufe erfolgt wobei die Kuppelung von Planetenträger und Orbitalrad mit einer, der entkuppelnden Kraft entgegenwirkenden, Kraft erfolgt.

5. Getriebe nach Anspruch (1), dadurch gekennzeichnet, daß die Planetenradträgernabe (3.2) wahlweise mit der Achse (2.1) verbunden, frei um die Achse laufen oder mit dem Orbitalrad (1.5) verbunden um die Achse laufen kann.

6. Getriebe nach Anspruch (5), dadurch gekennzeichnet, daß die Drehzahl der um die Achse (2.1) laufenden Planetenradträgernabe (3.2) elektrotechnisch beeinflußt werden kann.

7. Getriebe nach Anspruch (1), dadurch gekennzeichnet, daß in einer Getriebestufe mindestens 1 Zahnrad mit einem innenverzahnten Orbitalrad und zugleich mindestens 1 Zahnrad mit einem außenverzahnten Sonnenrad miteinander verbunden sind, wobei mindestens 1 Orbitalrad **und** mindestens 1 Sonnenrad durch eine Kraft mit einem im Kraftfluß liegenden drehbaren oder mit einem gehäusefesten Reaktionsteil so verbunden sind, daß dadurch die Drehbewegung des Zahnrades oder der Zahnräder blockiert ist (Brems- und Sperrfunktion).

8. Getriebe nach Anspruch (1), dadurch gekennzeichnet, daß in einer Getriebestufe mindestens 1 Zahnrad mit einem innenverzahnten Orbitalrad und zugleich mindestens 1 Zahnrad mit einem außenverzahnten Sonnenrad miteinander verbunden sind, wobei mindestens 1 Orbitalrad **oder** mindestens 1 Sonnenrad durch eine Kraft mit einem im Kraftfluß liegenden drehbaren oder mit einem gehäusefesten Reaktionsteil so verbunden sind, daß dadurch die Drehrichtung eines drehbaren Reaktionsteils verändert werden kann. (Drehrichtungswahl)

9. Getriebe nach Anspruch (1), dadurch gekennzeichnet, daß in einer Getriebestufe mindestens 1 Zahnrad mit einem innenverzahnten Orbitalrad und zugleich mindestens 1 Zahnrad mit einem außenverzahnten Sonnenrad miteinander verbunden sind, wobei mindestens 1 Orbitalrad **und** mindestens 1 Sonnenrad durch eine Kraft mit einem im Kraftfluß liegenden drehbaren oder mit einem gehäusefesten Reaktionsteil gelöst sind, daß dadurch die Drehbewegung der Antriebs- oder Abtriebswelle frei erfolgen kann (Freilauf).

10. Getriebe nach Anspruch (1), dadurch gekennzeichnet, daß zu der Antriebswelle und der Abtriebswelle noch mindestens 1 weitere antreibende oder abtreibende Welle zur Leistungsverzweigung aus dem Getriebegehäuse oder den Lagerschildern herausgeführt ist.

11. Getriebe nach Anspruch (1), dadurch gekennzeichnet, daß in einer Stufe der Planetenradträger mit der Achse mechanisch so verbunden ist, daß die, durch die Drehbewegung der Planetenräder hervorgerufene, Reaktionskraft durch mindestens 1 Sensor erfaßt werden kann

12. Getriebe nach Anspruch (11), dadurch gekennzeichnet, daß die Richtung der Reaktionskraft durch mindestens 2 Sensoren erfaßt und voneinander unterschieden werden kann.

13. Getriebe nach Anspruch (1), dadurch gekennzeichnet, daß in mindestens 1 Stufe die Drehzahl eines umlaufenden Teils einer Stufe durch einen Sensor erfaßt wird.

14. Getriebe nach Anspruch (1), dadurch gekennzeichnet, daß die Zentralachse oder das Getriebegehäuse als Trägerachse für weitere Anwendungen der Antriebstechnik oder für Anwendungen zur Energieerzeugung genutzt wird.

15. Getriebe nach Anspruch (1), dadurch gekennzeichnet, daß in der Eingangsstufe über ein schaltbares Reaktionsteil (3.9) eine Drehrichtungswahl oder eine Freilaufstellung erzeugt wird.

16. Getriebe nach Anspruch (1), dadurch gekennzeichnet, daß in der Ausgangsstufe ein Kegelradausgleichgetriebe (3.12) im Getriebegehäuse integriert oder am Getriebegehäuse montiert ist und zur Leistungsverzweigung genutzt wird.
